(19) **Europäisches Patentamt European Patent Office Office européen des brevets**

(11) **EP 4 270 842 B1**

(12) **EUROPEAN PATENT SPECIFICATION**

(45) Date of publication and mention
of the grant of the patent:
**22.07.2026  Bulletin 2026/30**

(51) International Patent Classification (IPC):
***H04L 5/00*** *(2006.01)*

(52) Cooperative Patent Classification (CPC):
**H04L 5/001; H04L 5/0051; H04L 5/0053**

(21) Application number: **23154634.2**

(22) Date of filing: **02.02.2023**

(54) **METHOD FOR TRANSMITTING AND RECEIVING SIGNAL IN WIRELESS COMMUNICATION SYSTEM AND APPARATUS FOR SUPPORTING SAME**

VERFAHREN ZUM SENDEN UND EMPFANGEN EINES SIGNALS IN EINEM DRAHTLOSKOMMUNIKATIONSSYSTEM UND VORRICHTUNG ZUR UNTERSTÜTZUNG DAVON

PROCÉDÉ D'ÉMISSION ET DE RÉCEPTION DE SIGNAL DANS UN SYSTÈME DE COMMUNICATION SANS FIL ET APPAREIL LE PRENANT EN CHARGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.04.2022  US 202263336287 P**

(43) Date of publication of application:
**01.11.2023  Bulletin 2023/44**

(73) Proprietor: **LG Electronics Inc.**
**Seoul 07336 (KR)**

(72) Inventors:
• **LEE, Jeongsu**
**06772 Seoul (KR)**
• **HWANG, Seunggye**
**06772 Seoul (KR)**
• **KIM, Jaehyung**
**06772 Seoul (KR)**

(74) Representative: **Maikowski & Ninnemann Patentanwälte Partnerschaft mbB Postfach 15 09 20 10671 Berlin (DE)**

(56) References cited:
**US-A1- 2021 242 913    US-A1- 2022 052 813**

**Description**

**BACKGROUND**

**Field**

The present disclosure relates to a wireless communication system, and more particularly, to a method for transmitting and receiving a signal in a wireless communication system and apparatus for supporting the same.

**Discussion of the Related Art**

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

US 2022/0052813 A1 discloses an SRS resource configuration method, a BWP switching processing method, and a related device. The SRS resource configuration method includes: sending first configuration information to a terminal, where the first configuration information is used to configure a pattern of an SRS resource, the SRS resource is distributed at equal intervals in frequency domain, an interval is M subcarriers, and M is an integer greater than 4.

US 2021/0242913 A1 discloses that a user equipment (UE) receives a maximum downlink (DL) multiple-input multiple-output (MIMO) layer configuration for DL communications, such as control signals or data signals, in one or more bandwidth parts (BWPs) and a positioning reference signal (PRS) configuration for receiving DL PRS. The UE receives DL PRS in an active BWP using a number of reception antennas based on, e.g., at least equal to, the maximum number of DL MIMO layers in the active bandwidth part. The UE is configured to transmit uplink (UL) PRS, e.g., SRS, for positioning purposes, using at least a maximum number of transmission antennas that is configured for communications purposes.

**SUMMARY**

Accordingly, the present disclosure is directed to a method for transmitting and receiving a signal in a wireless communication system and apparatus for supporting the same that substantially obviates one or more problems due to limitations and disadvantages of the related art.

An object of the present disclosure is to provide a method and apparatus for transmitting and receiving a signal in a wireless communication system. The invention is defined by the independent claims. Features of certain embodiments are defined in the dependent claims.

To achieve these objects and other advantages and in accordance with the purpose of the disclosure, as embodied and broadly described herein, there is provided a method and apparatus for transmitting and receiving a signal in a wireless communication system.

According to the embodiment, a method performed by a user equipment (UE) in a wireless communication system may be provided.

According to the embodiment, the method may include receiving information on a plurality of first bandwidth parts (BWPs).

According to the embodiment, the method may include: receiving configuration information on a sounding reference signal (SRS) for positioning.

According to the embodiment, the configuration information may include at least one of information on at least one SRS resource set including at least one SRS resource or information on the SRS resource.

According to the embodiment, the method may include transmitting the SRS based on the configuration information.

According to the embodiment, based on identification of pattern information on a plurality of second BWPs, the SRS may be transmitted based on BWP switching based on the plurality of second BWPs.

According to the embodiment, the plurality of second BWPs may be at least a portion of the plurality of first BWPs.

According to the embodiment, in the BWP switching, a switching order between the plurality of second BWPs may be determined based on the pattern information.

According to the embodiment, a time duration in which the BWP switching is allowed may be configured, and the BWP switching may be performed within the time duration.

According to the embodiment, the plurality of second BWPs may be included in the time duration in a time domain.

According to the embodiment, the plurality of first BWPs may include a default BWP.

According to the embodiment, before the time duration, the UE may be configured to operate in the default BWP before the time duration.

According to the embodiment, after the time duration, the UE may be configured to perform BWP switching to the default BWP.

According to the embodiment, a timer related to each BWP of the plurality of second BWPs may be configured.

According to the embodiment, a start point of each BWP in the time domain may correspond to a start time of the timer.

According to the embodiment, an end point of each BWP in the time domain may correspond to an expiration time of the timer.

According to the embodiment, the plurality of second BWPs may be related to a plurality of BWP identifiers (IDs),

According to the embodiment, the pattern information may be identified according to predefined rules related to the plurality of BWP IDs.

According to the embodiment, the predefined rules may include a first rule for configuring first permutation information on the plurality of BWP IDs.

According to the embodiment, according to the first rule, the switching order between the plurality of second BWPs may be identified by an order of the plurality of BWP IDs included in the first permutation information.

According to the embodiment, the predefined rules may include a second rule for identifying the plurality of BWP IDs by performing a modulation operation while increasing or decreasing an active BWP ID of the UE by 1,

According to the embodiment, according to the second rule, the switching order between the plurality of second BWPs may be identified by an order of the plurality of BWP IDs sequentially obtained by the modulation operation.

According to the embodiment, the predetermined rules may include a third rule for defining second permutation information on the plurality of BWP IDs for each of candidate values of a maximum number of uplink (UL) BWPs supportable by the UE.

According to the embodiment, according to the third rule, the switching order between the plurality of second BWPs may be identified by an order of the plurality of BWP IDs included in the second permutation information.

According to the embodiment, the UE may be a reduced capability (RedCap) UE.

According to the embodiment, a number of the plurality of first BWPs may correspond to a maximum number of UL BWPs supportable by the RedCap UE.

According to the embodiment, a user equipment (UE) configured to operate in a wireless communication system may be provided.

According to the embodiment, the UE may include a transceiver, and at least one processor coupled with the transceiver.

According to the embodiment, the at least one processor may be configured to receive information on a plurality of first BWPs.

According to the embodiment, the at least one processor may be configured to receive configuration information on an SRS for positioning.

According to the embodiment, the configuration information may include at least one of information on at least one SRS resource set including at least one SRS resource or information on the SRS resource.

According to the embodiment, the at least one processor may be configured to transmit the SRS based on the configuration information.

According to the embodiment, based on identification of pattern information on a plurality of second BWPs, the SRS may be transmitted based on BWP switching based on the plurality of second BWPs.

According to the embodiment, the plurality of second BWPs may be at least a portion of the plurality of first BWPs.

According to the embodiment, in the BWP switching, a switching order between the plurality of second BWPs may be determined based on the pattern information.

According to the embodiment, the at least one processor may be configured to communicate with at least one of a UE, a network, and an autonomous vehicle other than a vehicle in which the UE is included.

According to the embodiment, a method performed by a base station in a wireless communication system may be provided.

According to the embodiment, the method may include transmitting information on a plurality of first BWPs.

According to the embodiment, the method may include transmitting configuration information on an SRS for positioning.

According to the embodiment, the configuration information may include at least one of information on at least one SRS resource set including at least one SRS resource or information on the SRS resource.

According to the embodiment, the method may include receiving the SRS in response to the configuration information.

According to the embodiment, based on identification of pattern information on a plurality of second BWPs, the SRS may be received based on BWP switching based on the plurality of second BWPs.

According to the embodiment, the plurality of second BWPs may be at least a portion of the plurality of first BWPs.

According to the embodiment, in the BWP switching, a switching order between the plurality of second BWPs may be determined based on the pattern information.

According to the embodiment, a base station operating in a wireless communication system may be provided.

According to the embodiment, the base station may include a transceiver, and at least one processor coupled with the transceiver.

According to the embodiment, the at least one processor may be configured to transmit information on a plurality of first BWPs.

According to the embodiment, the at least one processor may be configured to transmit configuration information on an SRS for positioning.

According to the embodiment, the configuration information may include at least one of information on at least one SRS resource set including at least one SRS resource or information on the SRS resource.

According to the embodiment, the at least one processor may be configured to receive the SRS in response to the configuration information.

According to the embodiment, based on identification of pattern information on a plurality of second BWPs, the SRS may be received based on BWP switching based on the plurality of second BWPs.

According to the embodiment, the plurality of second BWPs may be at least a portion of the plurality of first BWPs.

According to the embodiment, in the BWP switching, a switching order between the plurality of second BWPs may be determined based on the pattern information.

According to the embodiment, an apparatus operating in a wireless communication system may be provided.

According to the embodiment, the apparatus may include at least one processor, and at least one memory storing at least one instruction to cause the at least one processor to perform operations.

According to the embodiment, the operations may include receiving information on a plurality of first BWPs.

According to the embodiment, the operations may include receiving configuration information on an SRS for positioning.

According to the embodiment, the configuration information may include at least one of information on at least one SRS resource set including at least one SRS resource or information on the SRS resource.

According to the embodiment, the operations may include transmitting the SRS based on the configuration information.

It is to be understood that both the foregoing general description and the following detailed description of the present disclosure are exemplary and explanatory and are intended to provide further explanation of the disclosure as claimed.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram illustrating physical channels and a signal transmission method using the physical channels, which may be used in the embodiment;

FIG. 2 is a diagram illustrating a radio frame structure in a new radio access technology (NR) system to which the embodiment is applicable;

FIG. 3 is a diagram illustrating mapping of physical channels in a slot, to which the embodiment is applicable;

FIG. 4 is a diagram illustrating mapping of physical channels in a slot, to which the embodiment is applicable;

FIG. 5 is a diagram illustrating an exemplary positioning protocol configuration for user equipment (UE) positioning, which is applicable to the embodiment;

FIG. 6 is a diagram illustrating an example of an architecture of a system for positioning a UE, to which the embodiment is applicable;

FIG. 7 is a diagram illustrating an example of a procedure of positioning a UE, to which the embodiment is applicable;

FIG. 8 is a diagram illustrating protocol layers for supporting LTE positioning protocol (LPP) message transmission, to which the embodiment is applicable;

FIG. 9 is a diagram illustrating protocol layers for supporting NR positioning protocol A (NRPPa) protocol data unit (PDU) transmission, to which the embodiment is applicable;

FIG. 10 is a diagram illustrating an observed time difference of arrival (OTDOA) positioning method, to which the embodiment is applicable;

FIG. 11 is a diagram illustrating a multi-round trip time (multi-RTT) positioning method to which the embodiment is applicable;

FIG. 12 is a simplified diagram illustrating a method of operating a UE, a transmission and reception point (TRP), a location server, and/or a location management function (LMF) according to the embodiment;

FIG. 13 is a simplified diagram illustrating a method of operating a UE, a TRP, a location server, and/or an LMF according to the embodiment;

FIG. 14 is a diagram illustrating an exemplary resource configuration for a sounding reference signal for positioning (SRSp) according to the embodiment;

FIG. 15 is a diagram illustrating exemplary bandwidth part (BWP) switching according to the embodiment;

FIG. 16 is a diagram schematically illustrating a method of operating a UE and a network node according to the embodiment;

FIG. 17 is a flowchart illustrating a method of operating the UE according to the embodiment;

FIG. 18 is a flowchart illustrating a method of operating the network node according to the embodiment;

FIG. 19 is a block diagram illustrating an apparatus for implementing various embodiments of the present disclosure;

FIG. 20 illustrates an exemplary communication system to which various embodiments of the present disclosure are applied;

FIG. 21 illustrates exemplary wireless devices to which various embodiments of the present disclosure are applicable;

FIG. 22 illustrates other exemplary wireless devices to which various embodiments of the present disclosure are applied;

FIG. 23 illustrates an exemplary portable device to which various embodiments of the present disclosure are applied; and

FIG. 24 illustrates an exemplary vehicle or autonomous driving vehicle to which various embodiments of the present disclosure.

## DETAILED DESCRIPTION

Reference will now be made in detail to the preferred embodiments of the present disclosure, examples of which are illustrated in the accompanying drawings. Wherever possible, the same reference numbers will be used throughout the drawings to refer to the same or like parts.

The embodiment is applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

The embodiment is described in the context of a 3GPP communication system (e.g., including LTE, NR, 6G, and next-generation wireless communication systems) for clarity of description, to which the technical spirit of the embodiment is not limited. For the background art, terms, and abbreviations used in the description of the embodiment, refer to the technical specifications published before the present disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

### 1. 3GPP System

#### 1.1. Physical Channels and Signal Transmission and Reception

In a wireless access system, a UE receives information from a base station on a downlink (DL) and transmits information to the base station on an uplink (UL). The information transmitted and received between the UE and the base station includes general data information and various types of control information. There are many physical channels according to the types/usages of information transmitted and received between the base station and the UE.

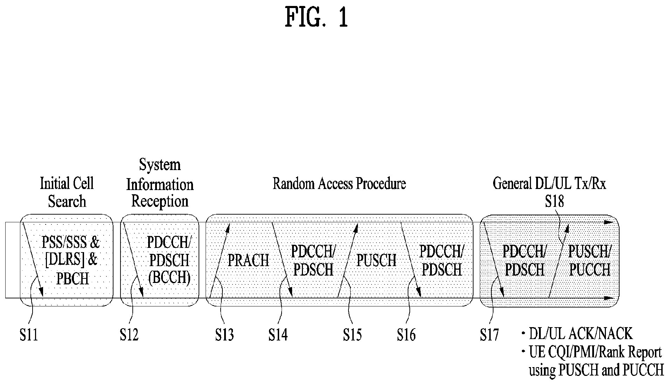

FIG. 1 is a diagram illustrating physical channels and a signal transmission method using the physical channels, which may be used in the embodiment.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Physical Resource

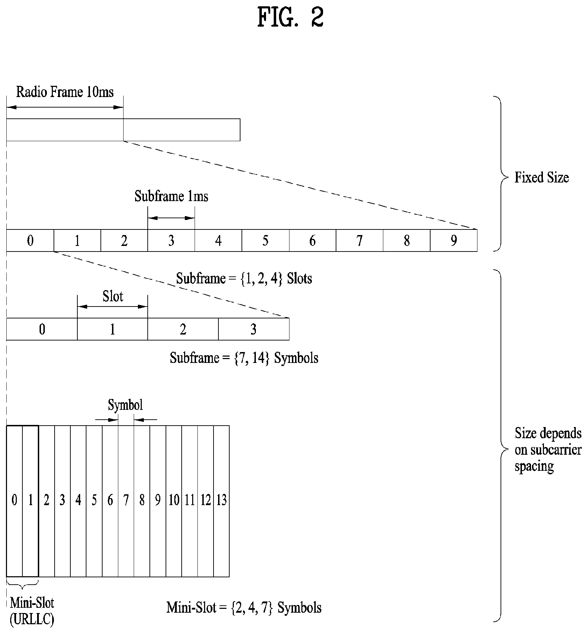

FIG. 2 is a diagram illustrating a radio frame structure in a new radio access technology (NR) system to which the embodiment is applicable.

The NR system may support multiple numerologies. A numerology may be defined by a subcarrier spacing (SCS) and a cyclic prefix (CP) overhead. Multiple SCSs may be derived by scaling a default SCS by an integer N (or $\mu$). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part, $\mu$ and a CP are obtained from RRC parameters provided by the BS.

[Table 1]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15 kHz, a dense-urban area, a lower latency, and a wider carrier bandwidth are supported for an SCS of 30/60 kHz, and a larger bandwidth than 24.25 GHz is supported for an SCS of 60 kHz or more, to overcome phase noise.

An NR frequency band is defined by two types of frequency ranges, FR1 and FR2. FR1 may be a sub-6 GHz range, and FR2 may be an above-6 GHz range, that is, a millimeter wave (mmWave) band.

Table 2 below defines the NR frequency band, by way of example.

[Table 2]

| Frequency range designation | Corresponding frequency range | Subcarrier Spacing |
|---|---|---|
| FR1 | 410 MHz - 7125 MHz | 15, 30, 60kHz |
| FR2 | 24250 MHz - 52600 MHz | 60, 120, 240kHz |

Regarding a frame structure in the NR system, the time-domain sizes of various fields are represented as multiples of a basic time unit for NR, $Tc = 1/(\triangle fmax*Nf)$ where $\triangle fmax =$

480* 103 Hz and a value Nf related to a fast Fourier transform (FFT) size or an inverse fast Fourier transform (IFFT) size is given as Nf = 4096. Tc and Ts which is an LTE-based time unit and sampling time, given as Ts = 1/((15 kHz) *2048) are placed in the following relationship: Ts/Tc = 64. DL and UL transmissions are organized into (radio) frames each having a duration of Tf = ($\Delta$fmax*Nf/100)*Tc = 10ms. Each radio frame includes 10 subframes each having a duration of Tsf = ($\Delta$fmax*Nf/1000)*Tc = 1ms. There may exist one set of frames for UL and one set of frames for DL. For a numerology $\mu$, slots are numbered with $n\mu s \in$ {0,...,Nslot,$\mu$subframe-1} in an increasing order in a subframe, and with $n\mu s,f \in$ {0,...,Nslot,$\mu$frame-1} in an increasing order in a radio frame. One slot includes N$\mu$symb consecutive OFDM symbols, and N$\mu$symb depends on a CP. The start of a slot $n\mu s$ in a subframe is aligned in time with the start of an OFDM symbol $n\mu s*N\mu$symb in the same subframe.

Table 3 lists the number of symbols per slot, the number of slots per frame, and the number of slots per subframe, for each SCS in a normal CP case, and Table 4 lists the number of symbols per slot, the number of slots per frame, and the number of slots per subframe, for each SCS in an extended CP case.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the above tables, $N^{slot}_{symb}$ represents the number of symbols in a slot, $N^{frame,\mu}_{slot}$ represents the number of slots in a frame, and $N^{subframe,\mu}_{slot}$ represents the number of slots in a subframe.

In the NR system to which the embodiment is applicable, different OFDM(A) numerologies (e.g., SCSs, CP lengths, and so on) may be configured for a plurality of cells which are aggregated for one UE. Accordingly, the (absolute time) period of a time resource including the same number of symbols (e.g., a subframe (SF), a slot, or a TTI) (generically referred to as a time unit (TU), for convenience) may be configured differently for the aggregated cells.

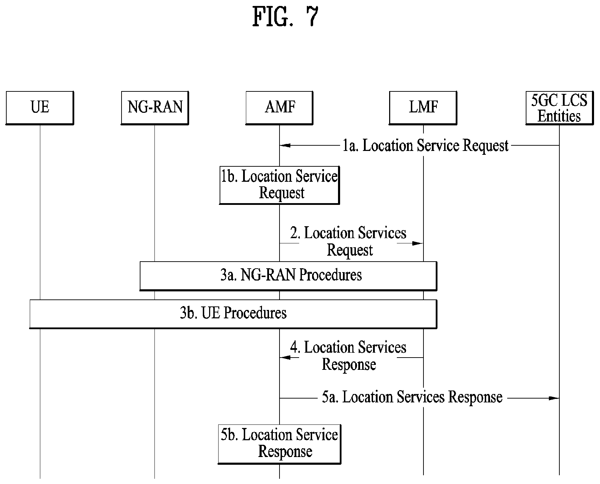

FIG. 2 illustrates an example with $\mu$=2 (i.e., an SCS of 60 kHz), in which referring to Table 6, one subframe may include four slots. One subframe = {1, 2, 4} slots in FIG. 7, which is exemplary, and the number of slot(s) which may be included in one subframe is defined as listed in Table 3 or Table 4.

Further, a mini-slot may include 2, 4 or 7 symbols, fewer symbols than 2, or more symbols than 7.

Regarding physical resources in the NR system, antenna ports, a resource grid, resource elements (REs), resource blocks (RBs), carrier parts, and so one may be considered. The physical resources in the NR system will be described below in detail.

An antenna port is defined such that a channel conveying a symbol on an antenna port may be inferred from a channel conveying another symbol on the same antenna port. When the large-scale properties of a channel carrying a symbol on one antenna port may be inferred from a channel carrying a symbol on another antenna port, the two antenna ports may be said to be in a quasi-co-located or quasi-co-location (QCL) relationship. The large-scale properties include one or more of delay spread, Doppler spread, frequency shift, average received power, received timing, average delay, and a spatial reception (Rx) parameter. The spatial Rx parameter refers to a spatial (Rx) channel property parameter such as an angle of arrival.

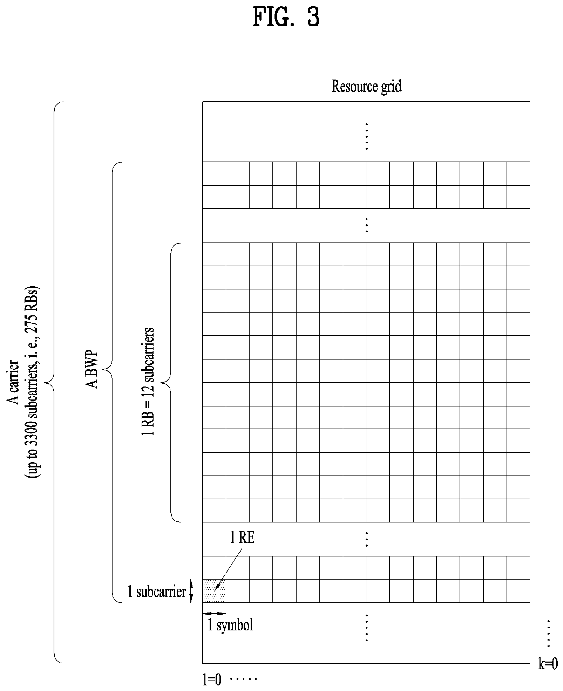

FIG. 3 illustrates an exemplary resource grid to which the embodiment is applicable.

Referring to FIG. 3, for each subcarrier spacing (SCS) and carrier, a resource grid is defined as $14 \times 2^{\mu}$ OFDM symbols by $N_{\mathrm{grid}}^{\mathrm{size},\mu} \times N_{\mathrm{SC}}^{\mathrm{RB}}$ subcarriers, where $N_{\mathrm{grid}}^{\mathrm{size},\mu}$ is indicated by RRC signaling from the BS. $N_{\mathrm{grid}}^{\mathrm{size},\mu}$ may vary according to an SCS configuration $\mu$ and a transmission direction, UL or DL. There is one resource grid for an SCS configuration $\mu$, an antenna port p, and a transmission direction (UL or DL). Each element of the resource grid for the SCS configuration $\mu$ and the antenna port p is referred to as an RE and uniquely identified by an index pair (k, l) where k represents an index in the frequency domain, and l represents a symbol position in the frequency domain relative to a reference point. The RE (k, l) for the SCS configuration $\mu$ and the antenna port p corresponds to a physical resource and a complex value $a_{k,l}^{(p,\mu)}$. An RB is defined as $N_{\mathrm{SC}}^{\mathrm{RB}} = 12$ consecutive subcarriers in the frequency domain.

Considering that the UE may not be capable of supporting a wide bandwidth supported in the NR system, the UE may be configured to operate in a part (bandwidth part (BWP)) of the frequency bandwidth of a cell.

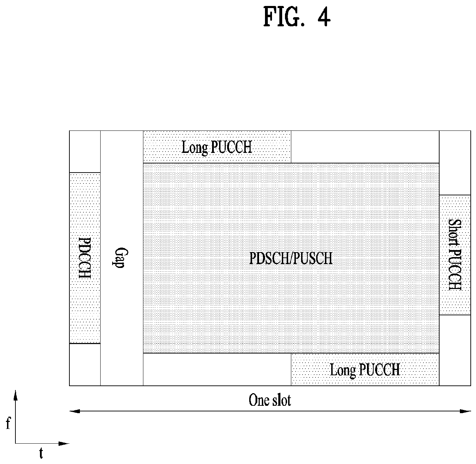

FIG. 4 is a diagram illustrating exemplary mapping of physical channels in a slot, to which the embodiment is applicable.

One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The BS transmits related signals to the UE on DL channels as described below, and the UE receives the related signals from the BS on the DL channels.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping are performed on a codeword basis, and modulation symbols generated from each codeword are mapped to one or more layers (layer mapping). Each layer together with a demodulation reference signal (DMRS) is mapped to resources, generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB.

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block (MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling.

The UE transmits related signals on later-described UL channels to the BS, and the BS receives the related signals on the UL channels from the UE.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

The PUCCH delivers UCI, an HARQ-ACK, and/or an SR and is classified as a short PUCCH or a long PUCCH according to the transmission duration of the PUCCH.

**BWP (bandwidth part)**

In the NR system to which the present disclosure is applicable, a frequency resource of up to 400 MHz may be allocated/supported for each CC. When a UE operating in such a wideband CC always operates with a radio frequency (RF) module for the entire CCs turned on, battery consumption of the UE may increase.

Alternatively, considering various use cases (e.g., enhanced mobile broadband (eMBB), ultra-reliable and low latency communication (URLLC), and massive machine type communication (mMTC), and so on) operating within a single wideband CC, a different numerology (e.g., SCS) may be supported for each frequency band within the CC.

Alternatively, the maximum bandwidth capability may be different for each UE.

In consideration of the above situation, the BS may indicate/configure the UE to operate only in a partial bandwidth instead of the entire bandwidth of the wideband CC. The partial bandwidth may be defined as a BWP.

A BWP may include consecutive RBs on the frequency axis, and one BWP may correspond to one numerology (e.g., SCS, CP length, slot/mini-slot duration, and so on).

The BS may configure a plurality of BWPs in one CC configured for the UE. For example, the BS may configure a BWP occupying a relatively small frequency region in a PDCCH monitoring slot, and schedule a PDSCH indicated by the PDCCH (or a PDSCH scheduled by the PDCCH) in a larger BWP. Alternatively, when UEs are concentrated on a specific BWP, the BS may configure another BWP for some of the UEs, for load balancing. Alternatively, the BS may exclude some spectrum of the entire bandwidth and configure both of the BWPs in the same slot in consideration of frequency-domain inter-cell interference cancellation between neighboring cells.

The BS may configure at least one DL/UL BWP for the UE associated with the wideband CC and activate at least one DL/UL BWP among the configured DL/UL BWP(s) at a specific time (through L1 signaling (e.g., DCI), MAC or RRC signaling, etc.). The activated DL/UL BWP may be called an active DL/UL BWP. The UE may fail to receive DL/UL BWP configurations from the BS during an initial access procedure or before setting up an RRC connection. A DL/UL BWP assumed by such a UE is defined as an initial active DL/UL BWP.

## 2. Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

### 2.1. Positioning Protocol configuration

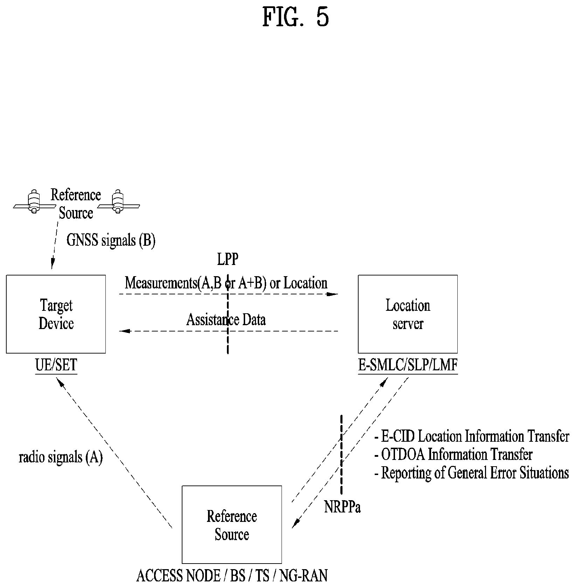

FIG. 5 is a diagram illustrating an exemplary positioning protocol configuration for positioning a UE, to which the embodiment is applicable.

Referring to FIG. 5, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.

- OTDOA Information Transfer. This function allows the reference source to exchange information with the LMF for the purpose of OTDOA positioning.
- Reporting of General Error Situations. This function allows reporting of general error situations, for which function-specific error messages have not been defined.

## 2.2. PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence $r(m)$ ($m$ = 0, 1, ...) may be defined by Equation 1.

[Equation 1]

$$r(m) = \frac{1}{\sqrt{2}}\big(1 - 2c(m)\big) + j\frac{1}{\sqrt{2}}\big(1 - 2c(m+1)\big)$$

In Equation 1, c(i) may be a pseudo-random sequence. A pseudo-random sequence generator may be initialized by Equation 2.

[Equation 2]

$$c_{\text{init}} = \left( 2^{22}\left\lfloor \frac{n_{\text{ID,seq}}^{\text{PRS}}}{1024} \right\rfloor + 2^{10}\big(N_{\text{symb}}^{\text{slot}} n_{\text{s,f}}^{\mu} + l + 1\big)\big(2\big(n_{\text{ID,seq}}^{\text{PRS}} \bmod 1024\big) + 1\big) \right.$$

$$\left. + \big(n_{\text{ID,seq}}^{\text{PRS}} \bmod 1024\big) \right) \bmod 2^{31}$$

$n_{\text{s,f}}^{\mu}$ may be a slot number in a frame in an SCS configuration μ. A DL PRS sequence ID $n_{\text{ID,seq}}^{\text{PRS}} \in \{0,1,\dots,4095\}$ may be given by a higher-layer parameter (e.g., DL-PRS-SequenceId). I may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k,l)_{p,\mu}$, specifically by Equation 3. $(k,l)_{p,\mu}$ may represent an RE (k, l) for an antenna port p and the SCS configuration μ.

[Equation 3]

$$a_{k,l}^{(p,\mu)} = \beta_{\mathrm{PRS}}\, r(m)$$

$$m = 0, 1, \ldots$$

$$k = mK_{\mathrm{comb}}^{\mathrm{PRS}} + \left( \left( k_{\mathrm{offset}}^{\mathrm{PRS}} + k' \right) \bmod K_{\mathrm{comb}}^{\mathrm{PRS}} \right)$$

$$l = l_{\mathrm{start}}^{\mathrm{PRS}}, l_{\mathrm{start}}^{\mathrm{PRS}} + 1, \ldots, l_{\mathrm{start}}^{\mathrm{PRS}} + L_{\mathrm{PRS}} - 1$$

Herein, the following conditions may have to be satisfied:

- The REs $(k,l)_{p,\mu}$ are included in an RB occupied by a DL PRS resource configured for the UE;
- The symbol l not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\mathrm{start}}^{\mathrm{PRS}}$ is the first symbol of the DL PRS in the slot, which may be given by a higher-layer parameter DL-PRS-ResourceSymbolOffset. The time-domain size of the DL PRS resource, $L_{\mathrm{PRS}} \in \{2,4,6,12\}$ may be given by a higher-layer parameter DL-PRS-NumSymbols. A comb size $K_{\mathrm{comb}}^{\mathrm{PRS}} \in \{2, 4, 6, 12\}$ may be given by a higher-layer parameter transmissionComb. A combination $\{L_{\mathrm{PRS}}, K_{\mathrm{comb}}^{\mathrm{PRS}}\}$ of $L_{\mathrm{PRS}}$ and $K_{\mathrm{comb}}^{\mathrm{PRS}}$ may be one of {2, 2}, {4, 2}, {6, 2}, {12, 2}, {4, 4}, {12, 4}, {6, 6}, {12, 6} and/or {12, 12}. An RE offset $k_{\mathrm{offset}}^{\mathrm{PRS}} \in \{0,1,\ldots,K_{\mathrm{comb}}^{\mathrm{PRS}} - 1\}$ may be given by combOffset. A frequency offset k' may be a function of $l - l_{\mathrm{start}}^{\mathrm{PRS}}$ as shown in Table 5.

[Table 5]

| $K_{\mathrm{comb}}^{\mathrm{PRS}}$ | Symbol number within the downlink PRS resource $l - l_{\mathrm{start}}^{\mathrm{PRS}}$ | | | | | | | | | | | |
|---|---|---|---|---|---|---|---|---|---|---|---|---|
| | **0** | **1** | **2** | **3** | **4** | **5** | **6** | **7** | **8** | **9** | **10** | **11** |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left( N_{\mathrm{slot}}^{\mathrm{frame},\mu} n_{\mathrm{f}} + n_{\mathrm{s,f}}^{\mu} - T_{\mathrm{offset}}^{\mathrm{PRS}} - T_{\mathrm{offset,res}}^{\mathrm{PRS}} \right) \bmod 2^{\mu} T_{\mathrm{per}}^{\mathrm{PRS}} \in \left\{ i T_{\mathrm{gap}}^{\mathrm{PRS}} \right\}_{i=0}^{T_{\mathrm{rep}}^{\mathrm{PRS}} - 1}$$

$N_{\text{slot}}^{\text{frame},\mu}$ may be the number of slots per frame in the SCS configuration $\mu$. $n_f$ may be a system frame number (SFN).

$n_{s,f}^{\mu}$ may be a slot number in a frame in the SCS configuration $\mu$. A slot offset $T_{\text{offset}}^{\text{PRS}} \in \{0, 1, ..., T_{\text{per}}^{\text{PRS}} - 1\}$ may be

given by a higher-layer parameter *DL-PRS-ResourceSetSlotOffset*. A DL PRS resource slot offset $T_{\text{offset,res}}^{\text{PRS}}$ may be

given by a higher layer parameter *DL-PRS-ResourceSlotOffset*. A periodicity

$T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity*. A repetition factor $T_{\text{rep}}^{\text{PRS}} \in \{1, 2, 4, 6, 8, 16, 32\}$ may be given by a higher-layer parameter DL-PRS-ResourceRepetitionFactor. A muting repetition factor $T_{\text{muting}}^{\text{PRS}}$ may be given by a higher-layer parameter *DL-PRS-MutingBitRepetitionFactor*. A time gap $T_{\text{gap}}^{\text{PRS}} \in \{1, 2, 4, 8, 16, 32\}$ may be given by a higher-layer parameter *DL-PRS-ResourceTimeGap*.

### 2.3. UE Positioning Architecture

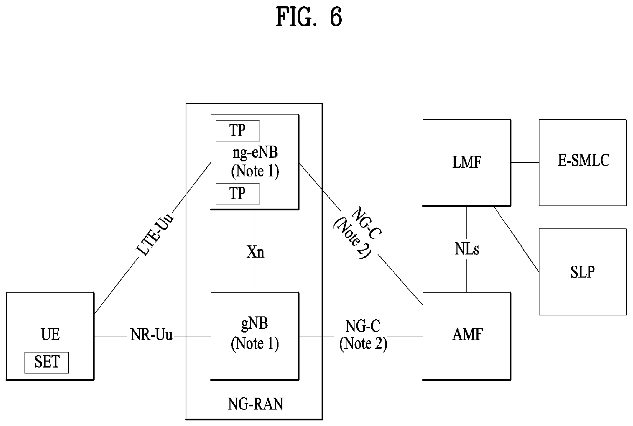

FIG. 6 illustrates an exemplary system architecture for measuring positioning of a UE to which the embodiment is applicable.

Referring to FIG. 6, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

## 2.4. Operation for UE Positioning

FIG. 7 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 7. In other words, in FIG. 7 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 7. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

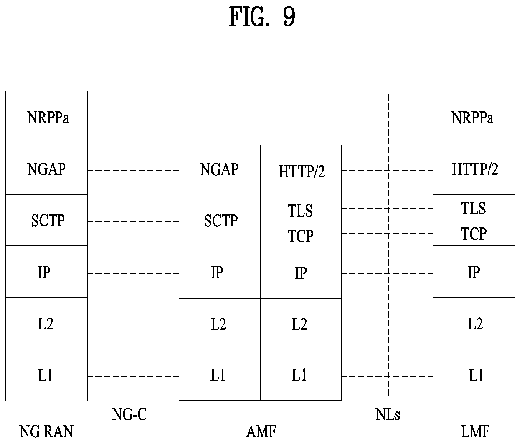

In step 4, the LMF may provide a location service response to the AMF. The location service response may include information as to whether UE positioning is successful and include a location estimate value of the UE. If the procedure of FIG. 7 has been initiated by step 1a, the AMF may transfer the location service response to a 5GC entity such as a GMLC. If the procedure of FIG. 9 has been initiated by step 1b, the AMF may use the location service response in order to provide a location service related to an emergency call.

### 2.5. Positioning Protocol

<u>LTE Positioning Protocol (LPP)</u>

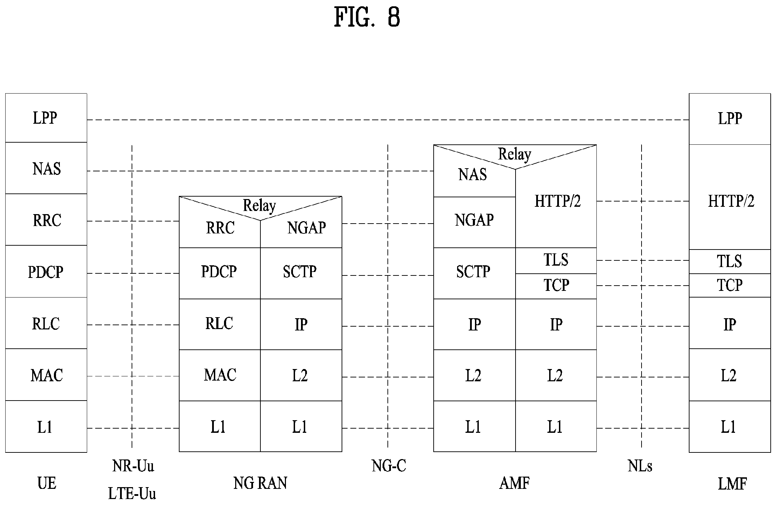

FIG. 8 illustrates an exemplary protocol layer used to support LPP message transfer between an LMF and a UE. An LPP protocol data unit (PDU) may be carried in a NAS PDU between an AMF and the UE.

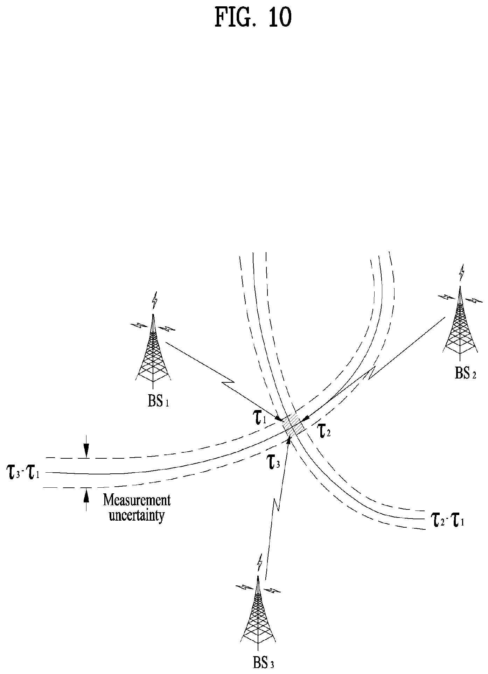

Referring to FIG. 10, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

<u>NR Positioning Protocol A (NRPPa)</u>

FIG. 9 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

### 2.6. Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

<u>OTDOA (Observed Time Difference Of Arrival)</u>

FIG. 10 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1} = \frac{\sqrt{(x_t-x_i)^2+(y_t-y_i)^2}}{c} - \frac{\sqrt{(x_t-x_1)^2+(y_t-y_1)^2}}{c} + (T_i-T_1)+(n_i-n_1)$$

In Equation 5, $c$ is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i-T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$$T_{ADV} \text{ Type 1} = (\text{ng-eNB Rx-Tx time difference})+(\text{UE E-UTRA Rx-Tx time difference})$$

$$TADV \text{ Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

Multi RTT (Multi-cell RTT)

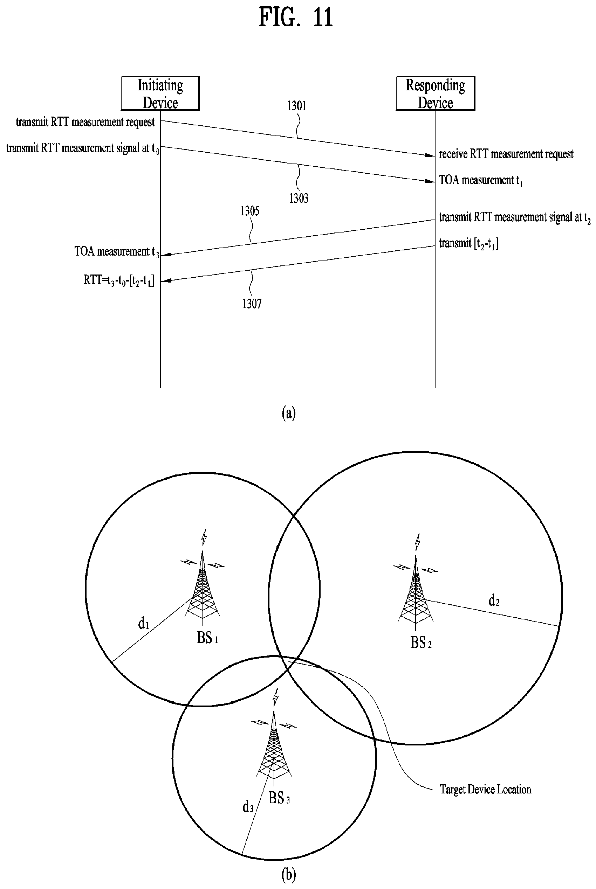

FIG. 11 is a diagram illustrating an exemplary multi-round trip time (multi-RTT) positioning method to which the embodiment is applicable.

Referring to FIG. 11(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

In operation 1301 according to the embodiment, the initiating device may transmit an RTT measurement request, and the responding device may receive the RTT measurement request.

In operation 1303 according to the embodiment, the initiating device may transmit an RTT measurement signal at t0 and the responding device may acquire a ToA measurement t1.

In operation 1305 according to the embodiment, the responding device may transmit an RTT measurement signal at t2 and the initiating device may acquire a ToA measurement t3.

In operation 1307 according to the embodiment, the responding device may transmit information about [t2-t1], and the initiating device may receive the information and calculate an RTT by Equation 6. The information may be transmitted and received based on a separate signal or in the RTT measurement signal of operation 1305.

[Equation 6]

$$RTT = t_3 - t_0 - [t_2 - t_1]$$

Referring to FIG. 11(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

### 2.7. Sounding Procedure

In a wireless communication system to which the embodiment is applicable, an SRS for positioning may be used.

An SRS-Config information element (IE) may be used to configure SRS transmission. (A list of) SRS resources and/or (a list of) SRS resource sets may be defined, and each resource set may be defined as a set of SRS resources.

The *SRS-Config* IE may include configuration information on an SRS (for other purposes) and configuration information on an SRS for positioning separately. For example, configuration information on an SRS resource set for the SRS (for other purposes) (e.g., *SRS-ResourceSet*) and configuration information on an SRS resource set for the SRS for positioning (e.g., *SRS-PosResourceSet*) may be included separately. In addition, configuration information on an SRS resource for the SRS (for other purposes) (e.g., *SRS-ResourceSet*) and configuration information on an SRS resource for the SRS for positioning (e.g., *SRS-PosResource*) may be included separately.

An SRS resource set for positioning may include one or more SRS resources for positioning. Configuration information on the SRS resource set for positioning may include: information on an identifier (ID) that is assigned/allocated/related to the SRS resource set for positioning; and information on an ID that is assigned/allocated/related to each of the one or more SRS resources for positioning. For example, configuration information on an SRS resource for positioning may include an ID assigned/allocated/related to a UL resource. In addition, each SRS resource/SRS resource set for positioning may be identified based on each ID assigned/allocated/related thereto.

The SRS may be configured periodically/semi-persistently/aperiodically.

An aperiodic SRS may be triggered by DCI. The DCI may include an SRS request field.

Table 6 shows an exemplary SRS request field.

[Table 6]

| Value of SRS request field | Triggered aperiodic SRS resource set(s) for DCI format 0_1, 0_2, 1_1, 1_2, and 2_3 configured with higher layer parameter *srs-TPC-PDCCH-Group* set to 'typeB' | Triggered aperiodic SRS resource set(s) for DCI format 2_3 configured with higher layer parameter *srs-TPC-PDCCH-Group* set to 'typeA' |
|---|---|---|
| 00 | No aperiodic SRS resource set triggered | No aperiodic SRS resource set triggered |
| 01 | SRS resource set(s) configured by *SRS-ResourceSet* with higher layer parameter *aperiodicSRS-ResourceTrigger* set to 1 or an entry in *aperiodicSRS-Resource TriggerList* set to 1 SRS resource set(s) configured by *SRS-PosResourceSet* with an entry in *aperiodicSRS-Resource TriggerList* set to 1 when triggered by DCI formats 0_1, 0_2, 1_1, and 1_2 | SRS resource set(s) configured with higher layer parameter *usage* in SRS-*ResourceSet* set to '*antennaSwitching*' and *resourceType* in SRS-*ResourceSet* set to 'aperiodic' for a 1st set of serving cells configured by higher layers |
| 10 | SRS resource set(s) configured by *SRS-ResourceSet* with higher layer parameter *aperiodicSRS-Resource* Trigger set to 2 or an entry in *aperiodicSRS-ResourceTriggertList* set to 2 SRS resource set(s) configured by *SRS-PosResourceSet* with an entry in *aperiodicSRS-Resource TriggerList* set to 2 when triggered by DCI formats 0_1, 0_2, 1_1, and 1_2 | SRS resource set(s) configured with higher layer parameter *usage* in SRS-*ResourceSet* set to '*antennaSwitching*' and *resourceType* in SRS-*ResourceSet* set to 'aperiodic' for a 2nd set of serving cells configured by higher layers |
| 11 | SRS resource set(s) configured by *SRS-ResourceSet* with higher layer parameter *aperiodicSRS-Resource Trigger* set to 3 or an entry in *aperiodicSRS-ResourceTriggerList* set to 3 SRS resource set(s) configured by *SRS-PosResourceSet* with an entry in *aperiodicSRS-Resource TriggerList* set to 3 when triggered by DCI formats 0_1, 0_2, 1_1, and 1_2 | SRS resource set(s) configured with higher layer parameter *usage* in SRS-*ResourceSet* set to '*antennaSwitching*' and *resourceType* in SRS-*ResourceSet* set to 'aperiodic' for a 3rd set of serving cells configured by higher layers |

In Table 6 srs-TPC-PDCCH-Group is a parameter for setting the triggering type for SRS transmission to type A or type B, aperiodicSRS-ResourceTriggerList is a parameter for configuring an additional list of DCI code points where the UE needs to transmit the SRS according to the SRS resource set configuration, aperiodicSRS-ResourceTrigger is a parameter for configuring a DCI code point where the SRS needs to be transmitted according to the SRS resource set configuration, and resourceType is a parameter for configuring (periodic/semi-static/aperiodic) time domain behavior of the SRS resource configuration.

## 3. Embodiment

A detailed description will be given of the embodiment based on the above technical ideas. The afore-described contents of Section 1 and Section 2 are applicable to the embodiment described below. For example, operations, functions, terminologies, and so on which are not defined in the embodiment may be performed and described based on Section 1 and Section 2.

Symbols/abbreviations/terms used in the description of the embodiment may be defined as follows.

- A/B/C: A and/or B and/or C
- LMF: location management function
- PRS: positioning reference signal

- SRS: sounding reference signal. According to the embodiment, the SRS may be used for UL channel estimation based on multi-input multi-output (MIMO) and positioning measurement. In other words, according to the embodiment, the SRS may include a normal SRS and a positioning SRS. According to the embodiment, the positioning SRS may be understood as a UL RS configured and/or used for UE positioning. According to the embodiment, the normal SRS is different from the positioning SRS. Specifically, the normal SRS may be understood as a UL RS configured and/or used for UL channel estimation (additionally or alternatively, the normal SRS may be understood as a UL RS configured and/or used for UL channel estimation and positioning). According to the embodiment, the positioning SRS may also be referred to as an SRS for positioning. In the description of the embodiment, the following terms: 'positioning SRS' and 'SRS for positioning' may be used interchangeably and understood to have the same meaning. According to the embodiment, the normal SRS may also be referred to as a legacy SRS, a MIMO SRS, an SRS for MIMO, or the like. In the description of the embodiment, the following terms: 'normal SRS', 'legacy SRS', 'MIMO SRS', and 'SRS for MIMO' may be used interchangeably and understood to have the same meaning. For example, the normal SRS and the positioning SRS may be separately configured/indicated. For example, the normal SRS and the positioning SRS may be configured/indicated by different IEs (information elements) of higher layers. For example, the normal SRS may be configured based on *SRS-resource*, and the positioning SRS may be configured based on *SRS-PosResource*.

- TRP: transmission and reception point (TP: transmission point)

In the description of the embodiment, a BS may be understood as a comprehensive term including a remote radio head (RRH), an eNB, a gNB, a TP, a reception point (RP), a relay, and the like.

In the description of the embodiment, the expression 'greater than/above A' may be replaced with the expression 'above/greater than A'.

In the description of the embodiment, the expression 'less than/below B' may be replaced with the expression 'below/less than B'.

The methods proposed in the embodiment described below may be applied to transmission of a PRS and/or an SRS for positioning.

The methods proposed in the embodiment described below may be applied regardless of RRC states.

According to the embodiment, the BS and/or UE may request a preferred value for a configuration parameter related to the methods proposed in the embodiment described below. According to the embodiment, the UE and/or BS may configure/transmit the configuration parameter in consideration of the requested preferred value. For example, the configuration parameter may be configured based on the requested preferred value, but the present disclosure is not limited thereto.

3GPP has standardized and developed technologies to support various devices such as machine type communication (MTC) devices and narrowband Internet of Things (NB-IOT) devices as well as existing portable UE devices. For example, reduced capability (RedCap) NR, which allows gains in terms of cost by lowering the capability of current NR, is less sensitive to data rates, and requires low latency, has been introduced as one of these technologies in Rel-17.

UEs that support RedCap may be used for wearables, industral wirelee sensors, video surveillance, etc. The UE that supports RedCap may decrease the maximum support number for the bandwidth reduction, MIMO layers, modulation orders, etc., reduce the number of Rx branches compared to the current NR UE, and support half-duplex (HD) on all bands, thereby obtaining capability gains.

The capabilities of the RedCap UE may be summarized as follows.

- Reduced maximum UE bandwidth: A maximum of 20 MHz for FR1 and a maximum of 100 MHz for FR2

- Reduced minimum number of UE Rx branches: For example, 1 or 2

- Reduced maximum number of MIMO layers: For example, 1,2

- Relaxed maximum modulation order: For example, 64 QAM

- Half-duplex FDD type A

When a UE supporting legacy NR is referred to as a normal UE (or legacy UE), the RedCap UE may have performance degradation in terms of (positioning) accuracy because the RedCap UE supports a small bandwidth.

According to the embodiment, there are provided a method for band swithcing/hopping to obtain a frequency diversity gain in an SRS for positioning (SRSp) for a RedCap UE and a method of transmitting a burst SRSp to obtain a combing gain in the time domain.

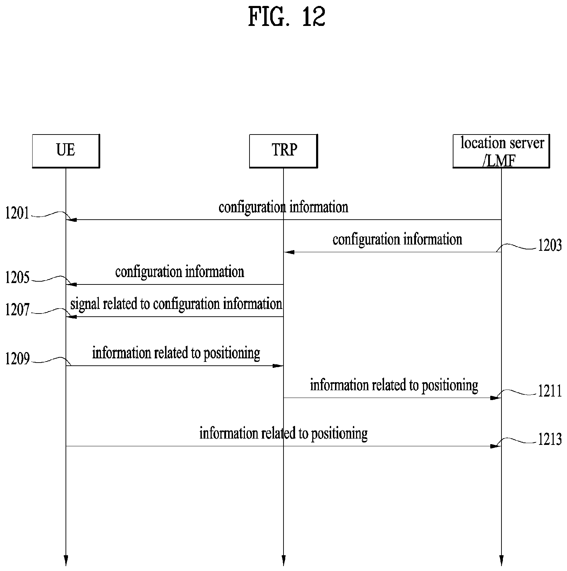

FIG. 12 is a simplified diagram illustrating an operating method of a UE, a TRP, a location server, and/or an LMF according to the embodiment.

Referring to FIG. 12, in operation 1201 according to the embodiment, the location server and/or the LMF may transmit configuration indicated to the UE and the UE may receive the configuration information.

In operation 1203 according to the embodiment, the location server and/or the LMF may transmit reference configuration information to the TRP and the TRP may receive the reference configuration information. In operation 1205 according to the embodiment, the TRP may transmit the reference configuration information to the UE and the UE may receive the reference configuration information. In this case, operation 1201 according to the embodiment may be omitted.

In contrast, operations 1203 and 1205 according to the embodiment may be omitted. In this case, operation 1201 according to the embodiment may be performed.

That is, operation 1201 according to the embodiment, and operations 1203 and 1205 according to the embodiment may be selectively performed.

In operation 1207 according to the embodiment, the TRP may transmit a signal related to the configuration information and the UE may receive the signal related to the configuration information. For example, the signal related to the configuration information may be a signal for positioning of the UE.

In operation 1209 according to the embodiment, the UE may transmit a signal related to positioning to the TRP and the TRP may receive the signal related to positioning. In operation 1211 according to the embodiment, the TRP may transmit the signal related to positioning to the location server and/or the LMF and the location server and/or the LMF may receive the signal related to positioning.

In operation 1213 according to the embodiment, the UE may transmit the signal related to positioning to the location server and/or the LMF and the location server and/or the LMF may receive the signal related to positioning. In this case, operations 1209 and 1211 according to the embodiment may be omitted.

In contrast, operation 1213 according to the embodiment may be omitted. In this case, operations 1209 and 1211 according to the embodiment may be performed.

That is, operations 1209 and 1211 according to the embodiment, and operation 1213 according to the embodiment may be selectively performed.

According to the embodiment, the signal related to positioning may be obtained based on the configuration information and/or the signal related to the configuration information.

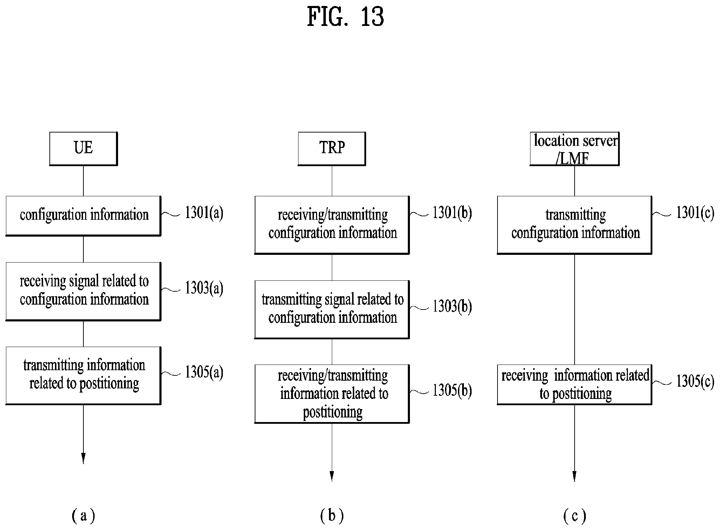

FIG. 13 is a simplified diagram illustrating an operating method of a UE, a TRP, a location server, and/or an LMF according to the embodiment.

Referring to FIG. 13(a), in operation 1301(a) according to the embodiment, the UE may receive configuration information.

In operation 1303(a) according to the embodiment, the UE may receive a signal related to the configuration information.

In operation 1305(a) according to the embodiment, the UE may transmit information related to positioning.

Referring to FIG. 13(b), in operation 1301(b) according to the embodiment, the TRP may receive configuration information from the location server and/or the LMF and transmit the configuration information to the UE.

In operation 1303(b) according to the embodiment, the TRP may transmit a signal related to the configuration information.

In operation 1305(b) according to the embodiment, the TRP may receive information related to positioning and transmit the information related to positioning to the location server and/or the LMF.

Referring to FIG. 13(c), in operation 1301(c) according to the embodiment, the location server and/or the LMF may transmit configuration information.

In operation 1305(c) according to the embodiment, the location server and/or the LMF may receive information related to positioning.

For example, the above-described configuration information may be understood as relating to reference configuration (information) or one or more pieces of information that the location server, the LMF, and/or the TRP transmits to/configures for the UE and/or may be understood as the reference configuration (information) or one or more pieces of information that the location server, the LMF, and/or the TRP transmits to/configures for the UE, in a description of the embodiment below.

For example, the above signal related to positioning may be understood as a signal related to one or more pieces of information that the UE reports and/or a signal including one or more pieces of information that the UE reports, in a description of the embodiment below.

For example, in a description of the embodiment below, the BS, the gNB, and the cell may be replaced with the TRP, the TP, or any device serving equally as the TRP or the TP.

For example, in a description of the embodiment below, the location server may be replaced with the LMF and any device serving equally as the LMF.

More detailed operations, functions, terms, etc. in operation methods according to the embodiment may be performed and described based on the embodiment described later. The operation methods according to the embodiment is exemplary and one or more operations in the above-described operation methods may be omitted according to detailed content of each embodiment.

Hereinafter, the embodiment will be described in detail. It may be understood by those of ordinary skill in the art that the embodiment described below may be combined in whole or in part to implement other embodiments unless mutually exclusive.

In general, the legacy UE may be provided with resource configuration information on an SRSp through UE-specific RRC signaling (e.g., *BWP-UplinkDedicated*). The corresponding SRSp resource configuration information may include information on time/frequency resources, information on resource(s)/set for the SRSp within the corresponding resources, information on power control for each set, and information on a spatial filters for each resource. In this case, since the SRSp is transmitted with a staggered pattern unlike the normal SRS (for MIMO), no separate frequency hopping may be supported.

However, the RedCap UE needs to perform SRSp transmission in a narrowband due to bandwidth (BW) limitations according to the reduced capability. As a result, since the SRSp is transmitted within a relatively small BW, compared to the legacy UE, accuracy performance may be degraded.

According to the embodiment, there are provided BWP switching and/or burst SRSp transmission methods based on a BW configuration for SRSp transmission of the RedCap UE and/or a pattern for obtaining a frequency diversity gain.

The methods described below may be combined in part or whole to implement another embodiment unless mutually exclusive, which may be clearly understood by those skilled in the art.

Method #1: Burst SRSp Transmission

For example, the start and periodicity of a PRS may be given for each resource set, and transmission of multiple PRS resources having the same index within a corresponding resource set may be supported by a repetition factor. In addition, the interval between adjacent PRS resources may be indicated by an additional gap, and the same PRS resource ID may be allocated in consecutive slots.

For example, for an SRSp, the UE may be configured with a plurality of resource sets in the same way as the PRS. One resource set may include a plurality of SRSp resource IDs. That is, one resource set may include a plurality of SRSp resources.

The same SRSp resource IDs may be allocated with a periodicity. However, for the SRSp, since the periodicity of an SRS resource is configured/indicated from a minimum of 1 slot to a maximum of 2560 slots, transmission in consecutive slots may not be allowed.

When the same SRSp resources that burst in units of slots are continuously allocated, and when the mobility of the UE is small, it is expected that the accuracy of the SRSp will be improved due to a combining gain.

According to the embodiment, a repetition factor, which is an additional parameter for burst SRSp transmission, may be provided. According to the embodiment, there are provided the operations of the UE and BS when the corresponding value is given.

According to the embodiment, the repetition factor may be configured by the BS as a natural number and then transmitted to the UE. According to the embodiment, the corresponding information may be transmitted along with an SRS configuration. According to the embodiment, a different value may be configured for each set, and/or a single value may be applied to all sets.

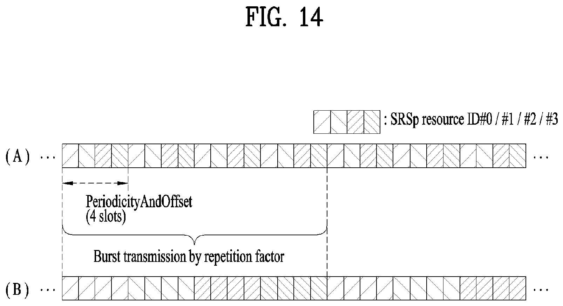

FIG. 14 is a diagram illustrating an exemplary resource configuration for an SRSp according to the embodiment. FIG. 14 illustrates exemplary continuous SRSp transmission based on a repetition factor according to the embodiment.

According to the embodiment, if the corresponding repetition factor is set to 'N', resources for the SRSp may be configured in such a way that N different SRSp resource IDs are allocated to resources evenly allocated within the periodicity of 'N' SRSp resources.

For example, when the repetition factor is 1, the UE may expect legacy operation other than burst SRSp transmission and use configured resources as they are.

For example, if the repetition factor is 2, the same SRSp resource ID may be transmitted twice in consecutive slots.

FIG. 14(A) illustrates an existing configuration when the periodicity of a SRSp resource is 4 and all SRSp resources within the periodicity are configured/indicated to the UE.

FIG. 14(B) illustrates exemplary burst SRSp transmission when the BS additionally provides a repetition factor of 4 to the UE. Each SRS resource may be repeated four times within one SRS resource set including SRS resources #0, #1, #2, and #3. As another example, when the BS provides a repetition factor of 2 to the UE, transmission may be repeated in the following order: SRSp resource IDs #0, #0, #1, #1, #2, #2, #3, ... with respect to the left slot.

According to the embodiment, if some resources collide with other UL channels such as a PUSCH while the same SRSp is repeated, symbol level dropping may be performed for the overlapping SRSp, and/or collision handling may be performed at the resource level as follows.

According to the embodiment, when the SRSp is transmitted after the repetition factor applied, at least one of the following methods may be used to handle a collision with other UL channels such as a PUSCH.

Alt 1-1

According to the embodiment, when all or part of one burst SRSp (e.g., a set of repeated and consecutive SRSps) collides with another UL channel, all SRS resources included in the burst SRSp may be dropped. This method may be advantageous in reducing the complexity of the UE and increasing the power saving gain.

Alt 1-2

According to the embodiment, when all or part of one burst SRSp (e.g., a set of repeated and consecutive SRSps) collides with another UL channel, only an SRS resource with the collision among SRS resources included in the burst SRSp may be dropped, and the remaining SRS resources may be determined to be available. The reason for this is to increase positioning accuracy by maximizing available SRS resources.

Alt 1-3

According to the embodiment, when all or part of one burst SRSp (e.g., a set of repeated and consecutive SRSps) collides with another UL channel, one of Alt 1-1 and Alt 1-2 may be selected depending on the number of collisions. For example, when the number (or ratio) of SRS resources where collisions occur on a burst SRSp is greater than or equal to a specific threshold, Alt 1-1 may be applied. Otherwise, Alt 1-2 may be applied. The reason for this is to optimize the power efficiency and accuracy by considering that power required for the UE to perform SRSp transmission may be large compared to accuracy performance when multiple symbols overlap.

According to the embodiment, the UE may provide a dropping unit for the SRSp and/or information on the dropping unit when reporting its capability. According to the embodiment, the BS may directly indicate the unit for dropping based on the capability through signaling for requesting SRS transmission and/or configuration information on the SRSp. Additionally/alternatively, according to the embodiment, the BS may recognize that there is a collision on a PUSCH based on the capability of the UE and may not expect to receive the SRSp reception at that time.

Method #2: Configuration of Gap for Allowing BW Switching

The RedCap UE may be configured with SRSp resources through RRC signaling (in '*BWP-UplinkDedicated*'). In this case, the size of a BW in which the UE is capable of transmitting an SRSp may be configured based on the capability of the UE. The UE may be configured with SRSp resources for each active BWP. The number of BWPs in which the UE transmits the SRSp may be equal to the number of UL BWPs. Information on a UL BWP supported by the UE may be included and reported when the UE reports its capability to the BS.

Regarding accuracy performance, it is possible to compensate for performance loss caused by SRSp transmission in a narrowband by obtaining a frequency diversity gain based on switching of a BWP for SRS transmission (sBWP). However, considering that the UE prefers one transceiver in terms of size and cost, indiscriminate BWP switching may not only cause resource loss due to a BWP switching time but also affect the power consumption of the UE.

According to the embodiment, for positioning accuracy enhancement of the RedCap UE, a gap or window may be configured to allow the UE to transmit the SRSp by performing BWP switching on all sBWPs configured/indicated in a limited duration. In the description of the embodiment, the gap and window may be interchanged with each other and may be understood as the same unless stated otherwise.

According to the embodiment, the gap may be configured one time as an offset and/or duration. Additionally/alternatively, the gap may be configured/indicated by offset, duration, and/or periodicity information to allow the RedCap UE to perform BWP switching periodically.

According to the embodiment, information on the gap may be delivered to the UE through RRC and/or system information. According to the embodiment, information on the gap may also be delivered to the LMF in an NRPPa message. Upon receiving the NRPPa message, the LMF may forward the information on the gap to neighboring cells/BSs/TRPs.

According to the embodiment, the UE and/or LMF may request to configure a preferred gap for the corresponding gap. According to the embodiment, upon receiving the request for the preferred gap, the BS may configure the gap in consideration of the preferred gap. For example, the BS may set the gap to the requested preference gap, but the present disclosure is not limited thereto.

According to the embodiment, the RedCap UE may be restricted not to transmit data except for the SRSp within the corresponding duration (gap or window).

According to the embodiment, the UE may perform switching of BWPs in the following order and/or pattern according to the embodiment described below at a point where the configured duration (gap or window) starts.

According to the embodiment, when switching is performed, the SRSp may be transmitted on SRSp resources configured for each BWP.

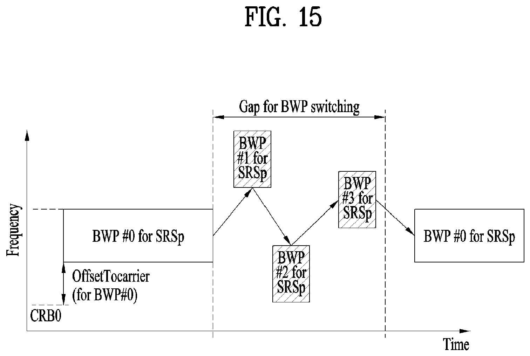

FIG. 15 is a diagram illustrating exemplary BWP switching according to the embodiment. FIG. 15 illustrates exemplary BWP switching of the RedCap UE within a configured gap according to the embodiment.

According to the embodiment, the UE may switch to a default BWP at the end of the window. Additionally/alternatively, the UE may return to the default BWP after expiration of a corresponding active BWP.

Referring to FIG. 15, for example, BWP #0 for an SRSp may be set (as the default BWP) based on an offset (OffsetTocarrier), which is configured based on common resource block (CRB) 0 in the frequency domain. For example, a gap for BWP switching may be configured in the time domain. BWP switching may be performed between BWP #1 (for the SRSp), BWP #2 (for the SRSp), and/or BWP #3 (for the SRSp) to transmit the SRSp within the gap. For example, the UE may switch to the default BWP, BWP #0 after the gap ends.

According to the embodiment, when the BS transmits information on the gap, the BS may transmit information on a timer for each active BWP together. According to the embodiment, the timer may correspond to time information on the expiration of the active BWP within the gap. According to the embodiment, when the timer expires, the UE may attempt to switch to a next BWP based on a pattern according to the embodiment described below, instead of switching to the default BWP within the gap. According to the embodiment, the timer may be configured/indicated in units of slots, subframes, or frames. Additionally and/or separately, according to the embodiment, the corresponding gap may also be used as a duration in which SRSp transmission is allowed. For example, the BS may allocate PRS resources in each slot first and then control the UE to transmit the SRSp only in a part overlapping with the configured gap. The UE may also expect to transmit the SRSp only in the corresponding part. According to the embodiment, the gap may be used separately or in common.

At least one of the following methods may be used to configure/indicate a pattern according to the embodiment.

<u>Alt. #1: Direct Pattern Indication Based on BWP ID</u>

According to Alt. #1, a BWP switching/hopping pattern may be indicated to the UE with a combination of BWP IDs. According to the embodiment, the BS may configure/indicate M consecutive BWP IDs to the UE, and the UE may sequentially perform BWP switching/hopping according to the configured M patterns. In this method, the pattern may be understood as a permutation of the M consecutive BWP IDs.

For example, when the total number of UL BWPs configured for the UE is 4, and when the following combination of four BWP IDs: {0, 2, 1, 3} is configured, the UE may perform BWP switching/hopping as follows: BWP #0 -> BWP #2 -> BWP #1 -> BWP #3 within a gap according to the embodiment. According to the embodiment, when the gap ends, the UE may perform BWP switching/hopping to the configured default BWP.

According to the embodiment, the BS may provide a flexible configuration in consideration of the frequency-domain intervals and/or locations of a plurality of UL BWPs configured for each UE.

<u>Alt. #2: Sequential Switching/Hopping Based on BWP ID</u>

According to Alt. #2, the UE may perform BWP switching/hopping sequentially by increasing or decreasing the current active BWP ID by '+1' or '-1' based on a separate pattern. According to the embodiment, since there are indices from 0 to the maximum number of supported IDs, the UE may perform switching/hopping by calculating the ID of a next active BWP through modulo operation. For the modulo operation, all UL BWPs may be considered.

For example, it is assumed that the total number of UL BWPs configured for the UE is 4 and BWP IDs are {0, 1, 2, 3}. If the current active BWP ID is 0, BWP switching may be performed in the following order: BWP ID #1 -> BWP ID #2 -> BWP ID #3, by increasing the active BWP ID by +1 (and applying the mod 4 operation). If the current active BWP ID is 3, BWP switching may be performed in the following order: BWP ID #0 -> BWP ID #1 -> BWP ID #2, by increasing the active BWP ID by +1 (and applying the mod 4 operation).

<u>Alt. #3: Predefined Switching/Hopping Pattern</u>

According to Alt. #3, a switching/hopping pattern may be predefined. According to the embodiment, the RedCap UE may perform BWP switching/hopping according to a preconfigured pattern, which depends on the total number of UL BWPs supported by the UE.

For example, if the maximum UL BWP supported by the RedCap UE is 4, each UE may have a value from 1 to 4.

Thus, a pattern may be determined depending on each value, except for '1', which does not support switching/hopping. In this method, the pattern may be understood as a permutation of (maximum number - 1) consecutive BWP IDs.

For example, if UL BWPs are 2, 3, and 4, patterns may be predefined/defined as {0, 1}, {0, 2, 1}, and {0, 2, 1, 3}, respectively. For example, if a specific RedCap UE supports three UL BWPs, the UE may perform BWP switching within a gap in the following order: BWP #0 -> BWP #2 -> BWP #1, regardless of the current BWP ID.

Additionally/alternatively, in consideration of the position of the current BWP, the corresponding values may be understood as offsets for the current BWP ID, respectively. For example, when the ID of the activate BWP of the UE before the gap is 2, and when the number of supported UL BWPs is 4, the UE may perform SRSp transmission on the current BWP ID, BWP ID #2 based on {0, 2, 1, 3} within the gap, and then the UE may perform BWP switching according to the BWP switching/hopping pattern, i.e., in the following order: BWP ID #0 -> BWP ID #3 -> BWP ID #1.

For example, when BWP switching/hopping is performed, configured/indicated SRSp resources may not be used due to a switching time (BWP switching time). Thus, according to the embodiment, the BS may configure/indicate the start position of SRSp symbols in consideration of the switching time.

If there is an SRSp symbol overlapping with the switching time, the UE may not expect to transmit an SRSp in the symbol. For example, the switching time may start before and/or after a BWP, and it may not be allowed that the overlapping duration is used at the symbol and/or slot level.

According to the embodiment described above, the BS may configure Method #1 (i.e., burst transmission) to obtain a combining gain, and at the same time, the BS may also use a gap for BWP-level hopping and/or switching/hopping in Method #2 in combination to obtain frequency diversity. For example, the UE may expect to perform BW switching/hopping in the following units, and the BS may also expect that the UE performs the BW switching/hopping in the corresponding units.

Opt. 1)

According to the embodiment, frequency hopping (FH) may be performed in units of burst SRSps.

According to the embodiment, the UE may transmit SRSps by performing BW switching/hopping sequentially in units for burst SRSp transmission, i.e., in units of resources repeated k times based on the pattern described above in Method #2.

Opt. 2)

According to the embodiment, FH may be defined between SRSp resources repeated within a burst SRSp. According to the embodiment, the structure of the burst SRSp may be configured depending on whether FH is enabled or disabled.

According to the embodiment, the UE may transmit an SRSp on each SRSp resource that is repeated as many times as the value of a repetition factor by performing BW switching/hopping sequentially according to the pattern described above in Method #2.

According to the embodiment, if BW switching/hopping is disabled, all resources of all SRSps repeated in consecutive slots may be used as described in Method #1.

For example, if BW switching/hopping is enabled:

(Alt1) According to the embodiment, a burst SRSp may be repeated with slot intervals between SRS resources in consideration of a BWP switching delay. According to the embodiment, repetition may not be performed on slots in which the BWP switching delay occurs. According to the embodiment, after performing BWP switching/hopping, the UE may attempt the BWP switching/hopping again one slot later according to a pattern and/or rule.

(Alt2) According to the embodiment, a burst SRSp may be adjusted in units of SRS resource symbols in consideration of a BWP switching delay.

In Alt1, the switching time may be processed in units of slots, but in Alt2, the switching time may be processed in units of symbols. According to the embodiment, at least one of the following two methods may be defined.

(Alt 2-1) According to the embodiment, when FH is enabled, the number of configurable SRS symbols may be limited to K or less. According to the embodiment, the first (and/or last) (12-K) symbols of a slot may be limited not to be used. According to the embodiment, K may depend on the duration of a switching time. According to the embodiment, the BS may configure resources for an SRSp in consideration of K.

(Alt 2-2) According to the embodiment, when FH is enabled, all SRS resources may be configured, but the first (and/or last) P symbols of a slot may be punctured.

For example, the BS may configure the UE to perform BWP switching/hopping on each slot in which burst transmission is performed as described in Method #2. Additionally and/or separately, when the UE is configured with a gap where the switching/hopping described in Method #2 is allowed, it may be expected that the UE will transmit repeated SRSs sequentially by performing the switching/hopping according to the method/pattern configured only within the corresponding gap.

Regarding parameters related to the above-described methods according to the embodiment, the UE and/or LMF may request a preferred value for each parameter. In addition, when reporting its capability, the UE may need to report to the BS whether the described features are supported

According to the embodiment, the above-described methods may be used, regardless of SRSp types (e.g., periodic, semi-persistent, aperiodic, etc.).

According to the embodiment, the above-described methods may also be used for PRS reception and resource configuration of the RedCap UE. For example, measurement may be performed for a plurality of positioning frequency layers (PFLs) configured during PRS reception based on the above-described switching/hopping pattern. Additionally/alternatively, the LMF may provide the UE with a gap configuration where the corresponding switching/hopping is allowed.

According to the embodiment, the gap configuration may be used in the same way for intensive PRS reception of the RedCap UE. According to the embodiment, the UE may perform PFL switching within the corresponding duration according to the pattern and/or rule described above, and PRS reception may be expected on PRS resources transmitted in the corresponding PFL.

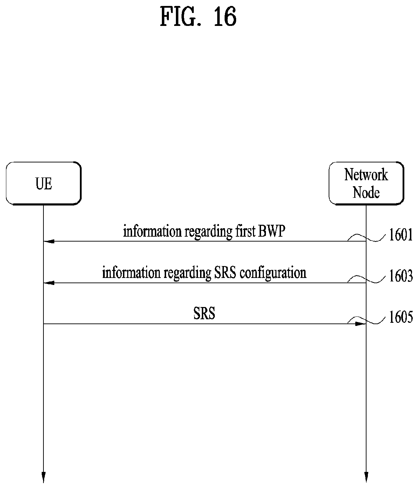

FIG. 16 is a diagram schematically illustrating a method of operating a UE and a network node according to the embodiment.

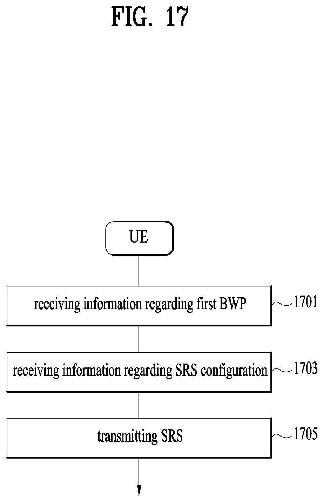

FIG. 17 is a flowchart illustrating a method of operating the UE according to the embodiment.

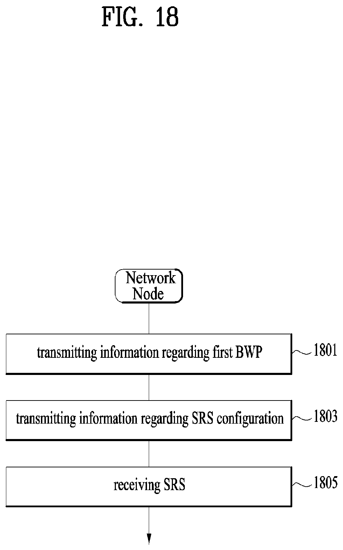

FIG. 18 is a flowchart illustrating a method of operating the network node according to the embodiment. For example, the network node may be a TP, a BS, a cell, a location server, an LMF, and/or any device performing the same operation.

Referring to FIGS. 16 to 18, in operations 1601, 1701, and 1801 according to the embodiment, the network node may transmit information on a plurality of first BWPs, and the UE may receive the information.

In operations 1603, 1703, and 1803 according to the embodiment, the network node may transmit configuration information on an SRS for positioning, and the UE may receive the configuration information.

According to the embodiment, the configuration information may include at least one of information on at least one SRS resource set including at least one SRS resource or information on the SRS resource.

In operations 1605, 1705, and 1805 according to the embodiment, the UE may transmit the SRS based on the configuration information, and the network node may receive the SRS.

According to the embodiment, based on identification of pattern information on a plurality of second BWPs, the SRS may be transmitted based on BWP switching based on the plurality of second BWPs.

According to the embodiment, the plurality of second BWPs may be at least a portion of the plurality of first BWPs.

According to the embodiment, in the BWP switching, a switching order between the plurality of second BWPs may be determined based on the pattern information.

Specific operations of the UE and/or the network node according to the above-described the embodiment may be described and performed based on Section 1 to Section 3 described before.

Since examples of the above-described proposal method may also be included in one of implementation methods of the embodiment, it is obvious that the examples are regarded as a sort of proposed methods. Although the above-proposed methods may be independently implemented, the proposed methods may be implemented in a combined (aggregated) form of a part of the proposed methods. A rule may be defined such that the BS informs the UE of information as to whether the proposed methods are applied (or information about rules of the proposed methods) through a predefined signal (e.g., a physical layer signal or a higher-layer signal).

## 4. Exemplary Configurations of Devices Implementing The embodiment

### 4.1. Exemplary configurations of devices to which the embodiment is applied

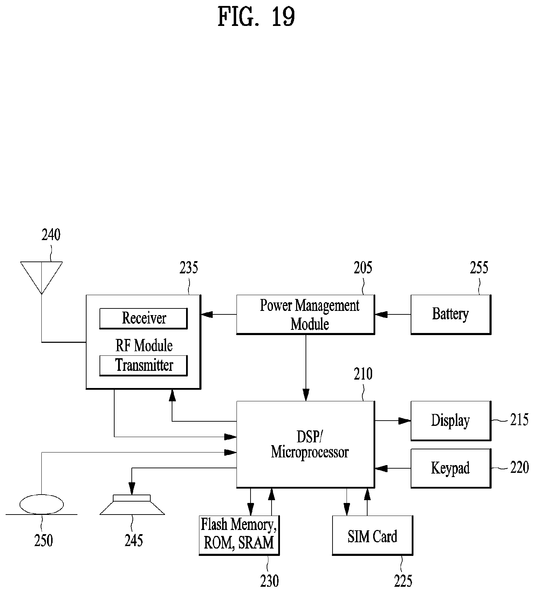

FIG. 19 is a diagram illustrating a device that implements the embodiment.

The device illustrated in FIG. 19 may be a UE and/or a BS (e.g., eNB or gNB or TP) and/or a location server (or LMF) which is adapted to perform the above-described mechanism, or any device performing the same operation.

Referring to FIG. 19, the device may include a digital signal processor (DSP)/microprocessor 210 and a radio frequency (RF) module (transceiver) 235. The DSP/microprocessor 210 is electrically coupled to the transceiver 235 and controls the transceiver 235. The device may further include a power management module 205, a battery 255, a display 215, a keypad 220, a SIM card 225, a memory device 230, an antenna 240, a speaker 245, and an input device 250, depending on a designer's selection.

Particularly, FIG. 19 may illustrate a UE including a receiver 235 configured to receive a request message from a network and a transmitter 235 configured to transmit timing transmission/reception timing information to the network. These receiver and transmitter may form the transceiver 235. The UE may further include a processor 210 coupled to the transceiver 235.

Further, FIG. 19 may illustrate a network device including a transmitter 235 configured to transmit a request message to a UE and a receiver 235 configured to receive timing transmission/reception timing information from the UE. These transmitter and receiver may form the transceiver 235. The network may further include the processor 210 coupled to the transceiver 235. The processor 210 may calculate latency based on the transmission/reception timing information.

A processor of a UE (or a communication device included in the UE) and/or a BS (or a communication device included in the BS) and/or a location server (or a communication device included in the location server) may operate by controlling a memory, as follows.

According to the embodiment, the UE or the BS or the location server may include at least one transceiver, at least one memory, and at least one processor coupled to the at least one transceiver and the at least one memory. The at least one memory may store instructions which cause the at least one processor to perform the following operations.

The communication device included in the UE or the BS or the location server may be configured to include the at least one processor and the at least one memory. The communication device may be configured to include the at least one transceiver or to be coupled to the at least one transceiver without including the at least one transceiver.

The TP and/or the BS and/or the cell and/or the location server and/or the LMF and/or any device performing the same operation may be referred to as a network node.

According to the embodiment, the at least one processor included in the UE (or at least one processor of the communication device included in the UE) may be configured to receive information on a plurality of first BWPs.

According to the embodiment, the at least one processor included in the UE may be configured to receive configuration information on an SRS for positioning.

According to the embodiment, the configuration information may include at least one of information on at least one SRS resource set including at least one SRS resource or information on the SRS resource.

According to the embodiment, the at least one processor included in the UE may be configured to transmit the SRS based on the configuration information.

According to the embodiment, based on identification of pattern information on a plurality of second BWPs, the SRS may be transmitted based on BWP switching based on the plurality of second BWPs.

According to the embodiment, the plurality of second BWPs may be at least a portion of the plurality of first BWPs.

According to the embodiment, in the BWP switching, a switching order between the plurality of second BWPs may be determined based on the pattern information.

According to the embodiment, the at least one processor included in the network node (or at least one processor of the communication device included in the network node) may be configured to transmit information on a plurality of first BWPs.

According to the embodiment, the at least one processor included in the network node may be configured to transmit configuration information on an SRS for positioning.

According to the embodiment, the configuration information may include at least one of information on at least one SRS resource set including at least one SRS resource or information on the SRS resource.

According to the embodiment, the at least one processor included in the network node may be configured to receive the SRS in response to the configuration information.

According to the embodiment, based on identification of pattern information on a plurality of second BWPs, the SRS may be received based on BWP switching based on the plurality of second BWPs,

According to the embodiment, the plurality of second BWPs may be at least a portion of the plurality of first BWPs.

According to the embodiment, in the BWP switching, a switching order between the plurality of second BWPs may be determined based on the pattern information.

Specific operations of the UE and/or the network node according to the above-described the embodiment may be described and performed based on Section 1 to Section 3 described before.

Unless contradicting each other, the embodiment may be implemented in combination. For example, (the processor included in) the UE and/or the network node according to the embodiment may perform operations in combination of the embodiments of the afore-described in Section 1 to Section 3, unless contradicting each other.

## 4.2. Example of communication system to which the embodiment is applied

In the present specification, the embodiment has been mainly described in relation to data transmission and reception between a BS and a UE in a wireless communication system. However, the embodiment is not limited thereto. For example, the embodiment may also relate to the following technical configurations.

The various descriptions, functions, procedures, proposals, methods, and/or operational flowcharts of the embodiment described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

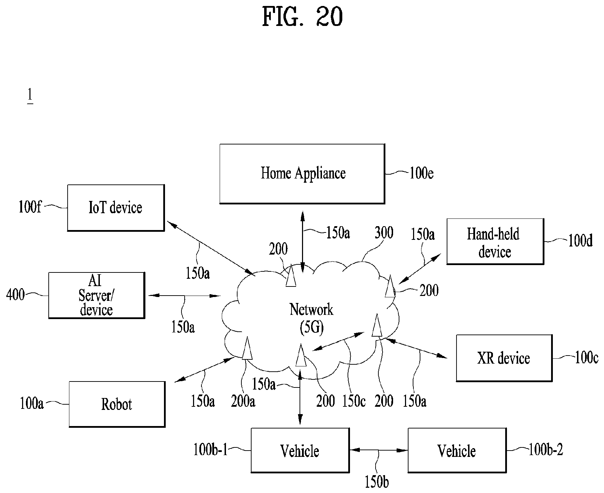

FIG. 20 illustrates an exemplary communication system to which the embodiment is applied.

Referring to FIG. 20, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

Example of wireless devices to which the embodiment is applied

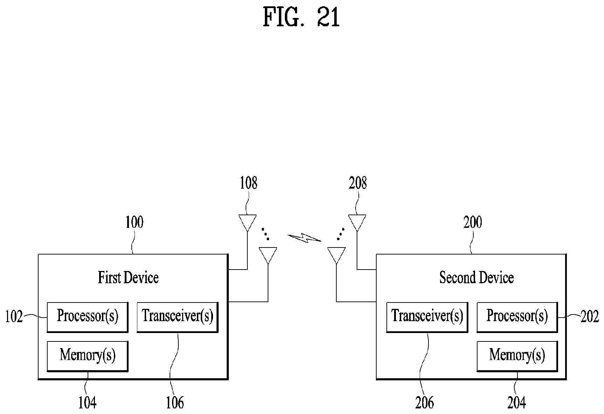

FIG. 21 illustrates exemplary wireless devices to which the embodiment is applicable.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to the embodiment, one or more memories (e.g., 104 or 204) may store instructions or programs which, when executed, cause one or more processors operably coupled to the one or more memories to perform operations according to the embodiment or implementations of the present disclosure.

According to the embodiment, a computer-readable storage medium may store one or more instructions or computer programs which, when executed by one or more processors, cause the one or more processors to perform operations according to the embodiment or implementations of the present disclosure.

According to the embodiment, a processing device or apparatus may include one or more processors and one or more computer memories connected to the one or more processors. The one or more computer memories may store instructions or programs which, when executed, cause the one or more processors operably coupled to the one or more memories to perform operations according to the embodiment or implementations of the present disclosure.

Example of using wireless devices to which the embodiment is applied

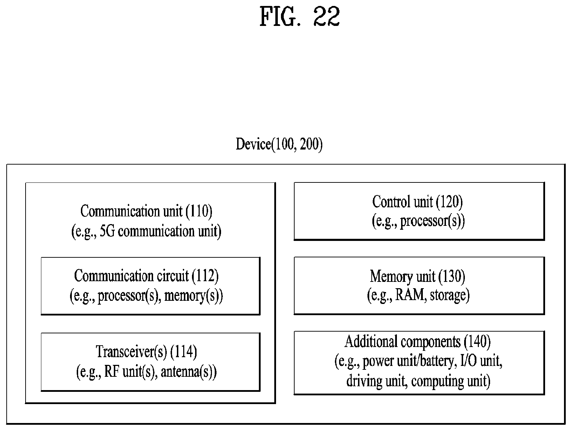

FIG. 22 illustrates other exemplary wireless devices to which the embodiment is applied. The wireless devices may be implemented in various forms according to a use case/service (see FIG. 21).

Referring to FIG. 22, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a Fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

Example of portable device to which the embodiment is applied

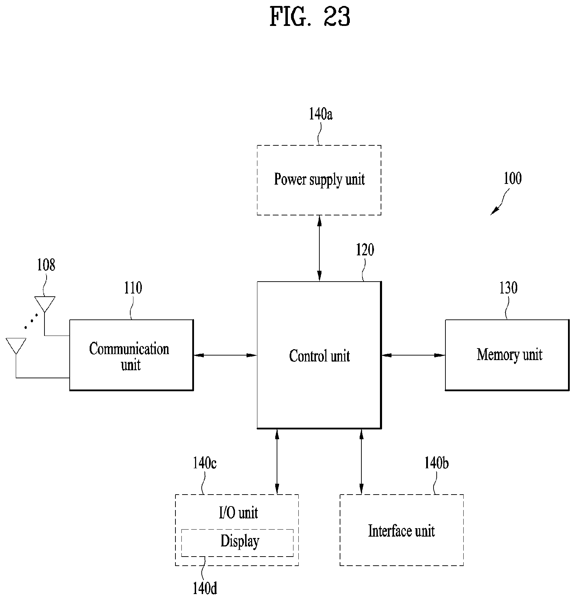

FIG. 23 illustrates an exemplary portable device to which the embodiment is applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Example of vehicle or autonomous driving vehicle to which the embodiment

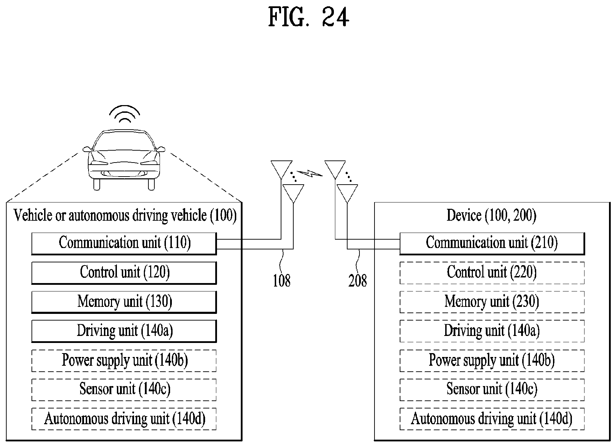

FIG. 24 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

In summary, the embodiment may be implemented through a certain device and/or UE.

For example, the certain device may be any of a BS, a network node, a transmitting UE, a receiving UE, a wireless device, a wireless communication device, a vehicle, a vehicle equipped with an autonomous driving function, an unmanned aerial vehicle (UAV), an artificial intelligence (AI) module, a robot, an augmented reality (AR) device, a virtual reality (VR) device, and other devices.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi-mode and multi-band (MM-MB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA 2000, WCDMA, and so on).

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which the embodiment is implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to the embodiment may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to the embodiment may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

The embodiment may be implemented in various means. For example, the embodiment may be implemented in hardware, firmware, software, or a combination thereof.

In a hardware configuration, the methods according to exemplary embodiments may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiment may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the embodiment may be carried out in other specific ways than those set forth herein. The above embodiments are therefore to be construed in all aspects as illustrative and not restrictive. The scope of the invention is determined by the appended claims, not by the above description.

As is apparent from the above description, the present disclosure has effects as follows.

According to the embodiment, a signal may be effectively transmitted and received in a wireless communication system.

According to the embodiment, positioning may be effectively performed in a wireless communication system.

According to the embodiment, positioning for a reduced capability (RedCap) user equipment (UE) may be effectively supported.

It will be appreciated by persons skilled in the art that the effects that can be achieved with the embodiment is not limited to what has been particularly described hereinabove.

**Claims**

1. A method performed by a user equipment, UE, (100) in a wireless communication system (1), the method comprising:

receiving (1601, 1701) information on a plurality of first bandwidth parts, BWPs; and
transmitting (1605, 1705) sounding reference signals, SRSs, for positioning on a plurality of second BWPs included in the plurality of first BWPs sequentially,
wherein active BWPs, on which the SRSs are transmitted sequentially, are switched within the plurality of second BWPs based on BWP switching order information, upon timers related to the plurality of second BWPs are expired,
wherein the BWP switching order information is configured per a possible number of the plurality of second BWPs.

2. The method of claim 1, wherein a time gap in which switching of the active BWPs is allowed is configured, wherein the active BWPs are switched during the time gap.

3. The method of claim 2, wherein the plurality of first BWPs include a default BWP,

wherein before the time gap, the UE (100) is configured to operate in the default BWP before the time duration, and
wherein after the time gap, the UE (100) is configured to switch from the active BWP to the default BWP.

4. The method of claim 1, wherein the plurality of second BWPs have a plurality of BWP identifiers, IDs, and wherein the BWP switching order information is identified by the plurality of BWP IDs.

5. The method of claim 1, wherein the UE (100) is a reduced capability, RedCap, UE (100), and wherein a number of the plurality of first BWPs corresponds to a maximum number of uplink, UL, BWPs supportable by the RedCap UE (100).

6. A user equipment, UE, (100) configured to operate in a wireless communication system (1), the UE (100) comprising:

a transceiver (106); and
at least one processor (102) connected to the transceiver (106),
wherein the at least one processor (102) is configured to:

receive (1601, 1701) information on a plurality of first bandwidth parts, BWPs; and
transmit (1605, 1705) sounding reference signals, SRSs, for positioning on a plurality of second BWPs included in the plurality of first BWPs sequentially,
wherein active BWPs, on which the SRSs are transmitted sequentially, are switched within the plurality of second BWPs based on BWP switching order information, upon timers related to the plurality of second BWPs are expired,
wherein the BWP switching order information is configured per a possible number of the plurality of second BWPs.

7. The UE (100) of claim 6, wherein the plurality of second BWPs have a plurality of BWP identifiers, IDs, and wherein the BWP switching order information is identified by the plurality of BWP IDs.

8. The UE (100) of claim 6, wherein the at least one processor (102) is configured to communicate with at least one of a mobile UE, a network (300), or an autonomous vehicle other than a vehicle including the UE (100).

9. A method performed by a base station (200) in a wireless communication system (1), the method comprising:

transmitting (1601, 1801) information on a plurality of first bandwidth parts, BWPs,; and

receiving (1605, 1805) sounding reference signals, SRSs, for positioning on a plurality of second BWPs included in the plurality of first BWPs sequentially,

wherein active BWPs, on which the SRSs are received sequentially, are switched within the plurality of second BWPs based on BWP switching order information, upon timers related to the plurality of second BWPs are expired,

wherein the BWP switching order information is configured per a possible number of the plurality of second BWPs.

10. A base station (200) configured to operate in a wireless communication system (1), the base station (200) comprising:

a transceiver (206); and
at least one processor (202) connected to the transceiver (206),
wherein the at least one processor (202) is configured to:

transmit (1601, 1801) information on a plurality of first bandwidth parts, BWPs,; and
receive (1805, 1805) sounding reference signals, SRSs, for positioning on a plurality of second BWPs included in the plurality of first BWPs sequentially,

wherein active BWPs, on which the SRSs are received sequentially, are switched within the plurality of second BWPs based on BWP switching order information, upon timers related to the plurality of second BWPs are expired,

wherein the BWP switching order information is configured per a possible number of the plurality of second BWPs.

11. A non-transitory processor-readable medium (104) configured to store one or more instructions that cause at least one processor (102) to perform operations comprising:

receiving (1601, 1701) information on a plurality of first bandwidth parts, BWPs; and
transmitting (1605, 1705) sounding reference signals, SRSs, for positioning on a plurality of second BWPs included in the plurality of first BWPs sequentially,

wherein active BWPs, on which the SRSs are transmitted sequentially, are switched within the plurality of second BWPs based on BWP switching order information, upon timers related to the plurality of second BWPs are expired,

wherein the BWP switching order information is configured per a possible number of the plurality of second BWPs.

## Patentansprüche

1. Verfahren, das durch ein Benutzergerät, UE, (100) in einem Drahtloskommunikationssystem (1) durchgeführt wird, wobei das Verfahren umfasst:

Empfangen (1601, 1701) von Informationen über mehrere erste Bandbreitenteile, BWPs; und
Übertragen (1605, 1705) von Sondierungsreferenzsignalen, SRSS, zum sequenziellen Positionieren auf mehreren zweiten BWPs, die in den mehreren ersten BWPs enthalten sind,
wobei aktive BWPs, auf denen die SRSS sequenziell übertragen werden, innerhalb der mehreren zweiten BWPs basierend auf BWP-Umschaltreihenfolgeinformationen geschaltet werden, wenn Timer, die sich auf die mehreren zweiten BWPs beziehen, abgelaufen sind,
wobei die BWP-Umschaltreihenfolgeinformationen pro eine mögliche Anzahl der mehreren zweiten BWPs konfiguriert sind.

2. Verfahren nach Anspruch 1, wobei eine Zeitlücke, in der das Schalten der aktiven BWPs erlaubt ist, konfiguriert ist, wobei die aktiven BWPs während der Zeitlücke geschaltet werden.

3. Verfahren nach Anspruch 2, wobei die mehreren ersten BWPs einen Standard-BWP enthalten,

wobei das UE (100) vor der Zeitlücke dazu konfiguriert ist, in dem Standard-BWP vor der Zeitdauer zu arbeiten, und
wobei das UE (100) nach der Zeitlücke dazu konfiguriert ist, von dem aktiven BWP zu dem Standard-BWP zu wechseln.

4. Verfahren nach Anspruch 1, wobei die mehreren zweiten BWPs mehrere BWP-Identifikatoren, BWP-IDs, aufweisen, und
wobei die BWP-Umschaltreihenfolgeinformationen durch die mehreren BWP-IDs identifiziert werden.

5. Verfahren nach Anspruch 1, wobei das UE (100) ein Reduced Capability UE, RedCap-UE, (100) ist, und
wobei eine Anzahl der mehreren ersten BWPs einer maximalen Anzahl von Uplink-BWPs, UL-BWPs, entspricht, die
durch das RedCap-UE unterstützt werden können (100).

6. Benutzergerät, UE, (100), das dazu konfiguriert ist, in einem Drahtloskommunikationssystem (1) zu arbeiten, wobei
das UE (100) umfasst:

   einen Transceiver (106); und
   mindestens einen Prozessor (102), der mit dem Transceiver (106) verbunden ist,
   wobei der mindestens eine Prozessor (102) dazu konfiguriert ist:

   Informationen über mehrere erste Bandbreitenteile, BWPs, zu empfangen (1601, 1701); und
   Sondierungsreferenzsignale, SRSS, zum sequenziellen Positionieren auf mehreren zweiten BWPs zu
   übertragen (1605, 1705), die in den mehreren ersten BWPs enthalten sind,
   wobei aktive BWPs, auf denen die SRSS sequenziell übertragen werden, innerhalb der mehreren zweiten
   BWPs basierend auf BWP-Umschaltreihenfolgeinformationen geschaltet werden, wenn Timer, die sich auf
   die mehreren zweiten BWPs beziehen, abgelaufen sind,
   wobei die BWP-Umschaltreihenfolgeinformationen pro eine mögliche Anzahl der mehreren zweiten BWPs
   konfiguriert sind.

7. UE (100) nach Anspruch 6, wobei die mehreren zweiten BWPs mehrere BWP-Identifikatoren, IDs, aufweisen und
wobei die BWP-Umschaltreihenfolgeinformationen durch die mehreren BWP-IDs identifiziert werden.

8. UE (100) nach Anspruch 6, wobei der mindestens eine Prozessor (102) dazu konfiguriert ist, mit mindestens einem
von einem mobilen UE, einem Netzwerk (300) oder einem autonomen Fahrzeug außer einem das UE (100)
enthaltende Fahrzeug zu kommunizieren.

9. Verfahren, das durch eine Basisstation, (200) in einem Drahtloskommunikationssystem (1) durchgeführt wird, wobei
das Verfahren umfasst:

   Übertragen (1601, 1801) von Informationen über mehrere erste Bandbreitenteile, BWPs; und
   Empfangen (1605, 1805) von Sondierungsreferenzsignalen, SRSS, zum sequenziellen Positionieren auf mehreren zweiten BWPs, die in den mehreren ersten BWPs enthalten sind,
   wobei aktive BWPs, auf denen die SRSS sequenziell empfangen werden, innerhalb der mehreren zweiten BWPs
   basierend auf BWP-Umschaltreihenfolgeinformationen geschaltet werden, wenn Timer, die sich auf die mehreren zweiten BWPs beziehen, abgelaufen sind,
   wobei die BWP-Umschaltreihenfolgeinformationen pro eine mögliche Anzahl der mehreren zweiten BWPs
   konfiguriert sind.

10. Basisstation (200), die dazu konfiguriert ist, in einem Drahtloskommunikationssystem (1) zu arbeiten, wobei die
Basisstation (200) umfasst:

   einen Transceiver (206); und
   mindestens einen Prozessor (202), der mit dem Transceiver (206) verbunden ist,
   wobei der mindestens eine Prozessor (202) dazu ausgelegt ist:

   Informationen über mehrere erste Bandbreitenteile, BWPs, zu übertragen (1601, 1801); und
   Sondierungsreferenzsignalen, SRSS, zum sequenziellen Positionieren auf mehreren zweiten BWPs zu
   empfangen (1605, 1805), die in den mehreren ersten BWPs enthalten sind,
   wobei aktive BWPs, auf denen die SRSS sequenziell empfangen werden, innerhalb der mehreren zweiten
   BWPs basierend auf BWP-Umschaltreihenfolgeinformationen geschaltet werden, wenn Timer, die sich auf
   die mehreren zweiten BWPs beziehen, abgelaufen sind,

wobei die BWP-Umschaltreihenfolgeinformationen pro eine mögliche Anzahl der mehreren zweiten BWPs konfiguriert sind.

11. Nichtflüchtiges prozessorlesbares Medium (104), das dazu konfiguriert ist, eine oder mehrfache Anweisungen zu speichern, die bewirken, dass mindestens ein Prozessor (102) Operationen durchführt, die umfassen:

Empfangen (1601, 1701) von Informationen über mehrere erste Bandbreitenteile, BWPs; und
Übertragen (1605, 1705) von Sondierungsreferenzsignalen, SRSS, zum sequenziellen Positionieren auf mehreren zweiten BWPs, die in den mehreren ersten BWPs enthalten sind,
wobei aktive BWPs, auf denen die SRSS sequenziell übertragen werden, innerhalb der mehreren zweiten BWPs basierend auf BWP-Umschaltreihenfolgeinformationen geschaltet werden, wenn Timer, die sich auf die mehreren zweiten BWPs beziehen, abgelaufen sind,
wobei die BWP-Umschaltreihenfolgeinformationen pro eine mögliche Anzahl der mehreren zweiten BWPs konfiguriert sind.

## Revendications

1. Procédé exécuté par un équipement utilisateur, UE, (100) dans un système de communication sans fil (1), le procédé comprenant les étapes suivantes :

recevoir (1601, 1701) des informations sur une pluralité de premières parties de largeur de bande, BWP ; et
transmettre (1605, 1705) des signaux de référence de sondage, SRS, pour un positionnement sur une pluralité de deuxièmes BWP comprises dans la pluralité de premières BWP, de manière séquentielle,

où les BWP actives, sur lesquelles les SRS sont transmis de manière séquentielle, sont commutées au sein de la pluralité de deuxièmes BWP sur la base d'informations d'ordre de commutation de BWP, lorsque des minuteurs liés à la pluralité de deuxièmes BWP sont expirés,
où les informations d'ordre de commutation de BWP sont configurées pour un nombre possible de la pluralité de deuxièmes BWP.

2. Procédé selon la revendication 1, dans lequel un écart temporel dans lequel une commutation des BWP actives est autorisée est configuré,
où les BWP actives sont commutées pendant l'écart temporel.

3. Procédé selon la revendication 2, dans lequel la pluralité de premières BWP comprend une BWP par défaut,

où, avant l'écart temporel, l'UE (100) est configuré pour fonctionner dans la BWP par défaut avant la durée de temps, et
où après l'écart temporel, l'UE (100) est configuré pour basculer de BWP active à la BWP par défaut.

4. Procédé selon la revendication 1, dans lequel la pluralité de deuxièmes BWP ont une pluralité d'identifiants, ID, de BWP, et
où les informations d'ordre de commutation de BWP sont identifiées par la pluralité d'ID de BWP.

5. Procédé selon la revendication 1, dans lequel l'UE (100) est un UE de capacité réduite, RedCap, (100), et où un certain nombre de la pluralité de premières BWP correspond à un nombre maximal de BWP de liaison montante, UL, pouvant être prises en charge par l'UE RedCap (100).

6. Équipement utilisateur, UE, (100) configuré pour fonctionner dans un système de communication sans fil (1), l'UE (100) comprenant :

un émetteur-récepteur (106) ; et
au moins un processeur (102) connecté à l'émetteur-récepteur (106) ;
où l'au moins un processeur (102) est configuré pour :

recevoir (1601, 1701) des informations sur une pluralité de premières parties de largeur de bande, BWP ; et
transmettre (1605, 1705) des signaux de référence de sondage, SRS, pour un positionnement sur une pluralité de deuxièmes BWP comprises dans la pluralité de premières BWP, de manière séquentielle, où les BWP actives, sur lesquelles les SRS sont transmis de manière séquentielle, sont commutées au sein de la pluralité de deuxièmes BWP sur la base d'informations d'ordre de commutation de BWP, lorsque des minuteurs liés à la pluralité de deuxièmes BWP sont expirés, où les informations d'ordre de commutation de BWP sont configurées pour un nombre possible de la pluralité de deuxièmes BWP.

7. UE (100) selon la revendication 6, dans lequel la pluralité de deuxièmes BWP ont une pluralité d'identifiants, ID, de BWP, et où les informations d'ordre de commutation de BWP sont identifiées par la pluralité d'ID de BWP.

8. UE (100) selon la revendication 6, dans lequel l'au moins un processeur (102) est configuré pour communiquer avec au moins l'un d'un UE mobile, d'un réseau (300), ou d'un véhicule autonome autre qu'un véhicule comprenant l'UE (100).

9. Procédé exécuté par une station de base (200) dans un système de communication sans fil (1), le procédé comprenant les étapes suivantes :

transmettre (1601, 1801) des informations sur une pluralité de premières parties de largeur de bande, BWP ; et recevoir (1605, 1805) des signaux de référence de sondage, SRS, pour un positionnement sur une pluralité de deuxièmes BWP comprises dans la pluralité de premières BWP, de manière séquentielle,

où les BWP actives, sur lesquelles les SRS sont reçus de manière séquentielle, sont commutées au sein de la pluralité de deuxièmes BWP sur la base d'informations d'ordre de commutation de BWP, lorsque des minuteurs liés à la pluralité de deuxièmes BWP sont expirés, où les informations d'ordre de commutation de BWP sont configurées pour un nombre possible de la pluralité de deuxièmes BWP.

10. Station de base (200) configurée pour fonctionner dans un système de communication sans fil (1), la station de base (200) comprenant :

un émetteur-récepteur (206) ; et au moins un processeur (202) connecté à l'émetteur-récepteur (206) ; où l'au moins un processeur (202) est configuré pour :

transmettre (1601, 1801) des informations sur une pluralité de premières parties de largeur de bande, BWP ; et recevoir (1805, 1805) des signaux de référence de sondage, SRS, pour un positionnement sur une pluralité de deuxièmes BWP comprises dans la pluralité de premières BWP, de manière séquentielle, où les BWP actives, sur lesquelles les SRS sont reçus de manière séquentielle, sont commutées au sein de la pluralité de deuxièmes BWP sur la base d'informations d'ordre de commutation de BWP, lorsque des minuteurs liés à la pluralité de deuxièmes BWP sont expirés, où les informations d'ordre de commutation de BWP sont configurées pour un nombre possible de la pluralité de deuxièmes BWP.

11. Support non transitoire lisible par un processeur (104) configuré pour stocker une ou plusieurs instructions qui amènent au moins un processeur (102) à exécuter des opérations comprenant les étapes suivantes :

recevoir (1601, 1701) des informations sur une pluralité de premières parties de largeur de bande, BWP ; et transmettre (1605, 1705) des signaux de référence de sondage, SRS, pour un positionnement sur une pluralité de deuxièmes BWP comprises dans la pluralité de premières BWP, de manière séquentielle,

où les BWP actives, sur lesquelles les SRS sont transmis de manière séquentielle, sont commutées au sein de la pluralité de deuxièmes BWP sur la base d'informations d'ordre de commutation de BWP, lorsque des minuteurs liés à la pluralité de deuxièmes BWP sont expirés, où les informations d'ordre de commutation de BWP sont configurées pour un nombre possible de la pluralité de deuxièmes BWP.

FIG. 1

# FIG. 2

Radio Frame 10ms

Fixed Size

Subframe 1ms

| 0 | 1 | 2 | 3 | 4 | 5 | 6 | 7 | 8 | 9 |

Subframe = {1, 2, 4} Slots

Slot

| 0 | 1 | 2 | 3 |

Subframe = {7, 14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot (URLLC)

Mini-Slot = {2, 4, 7} Symbols

# FIG. 3

# FIG. 4

# FIG. 5

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

# FIG. 6

# FIG. 7

EP 4 270 842 B1

# FIG. 8

FIG. 9

# FIG. 10

# FIG. 11

Initiating Device — Responding Device

transmit RTT measurement request

transmit RTT measurement signal at $t_0$

1301

receive RTT measurement request

TOA measurement $t_1$

1303

1305

transmit RTT measurement signal at $t_2$

TOA measurement $t_3$

transmit $[t_2 - t_1]$

$RTT = t_3 - t_0 - [t_2 - t_1]$

1307

(a)

$d_1$  BS$_1$

$d_2$  BS$_2$

$d_3$  BS$_3$

Target Device Location

(b)

# FIG. 12

# FIG. 13

UE

| configuration information | ~ 1301(a) |

| receiving signal related to configuration information | ~ 1303(a) |

| transmitting information related to postitioning | ~ 1305(a) |

( a )

TRP

| receiving/transmitting configuration information | ~ 1301(b) |

| transmitting signal related to configuration information | ~ 1303(b) |

| receiving/transmitting information related to postitioning | ~ 1305(b) |

( b )

location server /LMF

| transmitting configuration information | ~ 1301(c) |

| receiving information related to postitioning | ~ 1305(c) |

( c )

EP 4 270 842 B1

FIG. 14

: SRSp resource ID#0 / #1 / #2 / #3

(A) ···

PeriodicityAndOffset
(4 slots)

Burst transmission by repetition factor

(B) ···

## FIG. 15

# FIG. 16

```
┌──────┐                                              ┌──────────┐
│  UE  │                                              │ Network  │
│      │                                              │  Node    │
└──────┘                                              └──────────┘
   │                                                       │
   │◄────────── information regarding first BWP ───────────│ ⟶ 1601
   │                                                       │
   │◄────── information regarding SRS configuration ───────│ ⟶ 1603
   │                                                       │
   │───────────────────── SRS ─────────────────────────►  │ ⟶ 1605
   │                                                       │
   ▼                                                       ▼
```

# FIG. 17

```
                    ┌──────────┐
                    │    UE    │
                    └──────────┘
                         │
          ┌──────────────────────────────────────┐
          │ receiving information regarding first BWP │──1701
          └──────────────────────────────────────┘
                         │
          ┌──────────────────────────────────────┐
          │ receiving information regarding SRS configuration │──1703
          └──────────────────────────────────────┘
                         │
          ┌──────────────────────────────────────┐
          │          transmitting SRS            │──1705
          └──────────────────────────────────────┘
                         │
                         ▼
```

FIG. 18

```
              ┌─────────┐
              │ Network │
              │  Node   │
              └────┬────┘
                   │
   ┌───────────────┴────────────────────┐
   │ transmitting information regarding  │──1801
   │           first BWP                 │
   └───────────────┬────────────────────┘
                   │
   ┌───────────────┴────────────────────┐
   │ transmitting information regarding  │──1803
   │          SRS configuration          │
   └───────────────┬────────────────────┘
                   │
   ┌───────────────┴────────────────────┐
   │           receiving SRS             │──1805
   └───────────────┬────────────────────┘
                   │
                   ▼
```

## FIG. 19

# FIG. 20

# FIG. 21

# FIG. 22

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 23

# FIG. 24

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108

208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

**EP 4 270 842 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220052813 A1

- US 20210242913 A1